(19) Europäisches Patentamt / European Patent Office / Office européen des brevets

(11) **EP 4 570 856 B1**

(12) **EUROPEAN PATENT SPECIFICATION**

(45) Date of publication and mention
of the grant of the patent:
**29.07.2026  Bulletin 2026/31**

(21) Application number: **23216758.5**

(22) Date of filing: **14.12.2023**

(51) International Patent Classification (IPC):
*C08L 23/14* (2006.01)     *C08L 23/04* (2006.01)
*C08F 2/00* (2006.01)     *C08F 210/06* (2006.01)

(52) Cooperative Patent Classification (CPC):
(C-Sets available)
**C08L 23/14;** C08L 2205/025; C08L 2205/03;
C08L 2205/035     (Cont.)

(54) **POLYPROPYLENE RANDOM COPOLYMER COMPOSITIONS WITH IMPROVED IMPACT RESISTANCE FOR PIPE APPLICATIONS**

STATISTISCHE POLYPROPYLENCOPOLYMERZUSAMMENSETZUNGEN MIT VERBESSERTER SCHLAGFESTIGKEIT FÜR ROHRANWENDUNGEN

COMPOSITIONS DE COPOLYMÈRE STATISTIQUE DE POLYPROPYLÈNE PRÉSENTANT UNE RÉSISTANCE AUX CHOCS AMÉLIORÉE POUR DES APPLICATIONS DE TUYAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**18.06.2025  Bulletin 2025/25**

(73) Proprietors:
• **Borealis GmbH
1020 Vienna (AT)**
• **Abu Dhabi Polymers Co. Ltd (Borouge) - Sole
Proprietorship L.L.C.
Abu Dhabi (AE)**

(72) Inventors:
• **DAS, Subrata Kumar
Abu Dhabi (AE)**
• **ANTONY, Nisha
Abu Dhabi (AE)**
• **INEPEKOGLOU, Ioannis
Abu Dhabi (AE)**

(74) Representative: **Kador & Partner Part mbB
Corneliusstraße 15
80469 München (DE)**

(56) References cited:
**EP-B1- 3 303 469     EP-B1- 3 645 628**

(52) Cooperative Patent Classification (CPC): (Cont.)

C-Sets
**C08F 110/14, C08F 4/6492;**
**C08F 210/06, C08F 2/001;**
**C08F 210/06, C08F 4/651;**
**C08F 210/06, C08F 4/6545;**

**C08K 5/0083, C08F 210/06;**
**C08L 23/14, C08L 23/14, C08L 23/04, C08L 23/20;**
C08F 210/06, C08F 210/16, C08F 2500/05,
C08F 2500/12, C08F 2500/27, C08F 2500/35;
C08F 210/06, C08F 210/16, C08F 2500/12,
C08F 2500/27, C08F 2500/35

**Description**

The present invention relates to propylene compositions comprising a nucleated propylene copolymer having an improved balance of properties in regard of mechanical properties including stiffness and toughness which are particularly suitable for pipe applications. The invention further relates to respective processes for the production of such polypropylene compositions, an article comprising the polypropylene compositions and the use of the polypropylene compositions for the production of an article.

Polypropylene materials are frequently used for various pipe and pipe fitting applications (e.g. EP3645628B1), such as

fluid transport, e.g. water or natural gas, during which the fluid is pressurized and/or heated. In particular, polypropylene materials are used in applications for plumbing and heating, such as in-house hot and cold water pressure pipes and fittings, floor and wall heating systems and radiator connections.

Thereby, propylene random copolymers (PPRC) are especially suitable for pressure pipe applications for hot water and industrial pipes as the random copolymers have inter alia good impact performance, stiffness, creep resistance and slow crack properties and long term pressure resistance.

In particular, polypropylene random copolymers for hot and cold water applications require a good balance of stiffness (resistance to static loads - hydrostatic pressure) and toughness (resistance to dynamic loads - impact at low temperatures).

The expression "pressure pipe" used herein refers to a pipe which, when used, is subjected to a positive pressure, that is the pressure inside the pipe being higher than the pressure outside the pipe.

It is well known that increasing one of the impact or stiffness properties sacrifices the other.

For high pressure pipes, however, a good balance between impact properties and stiffness is mandatory to ensure sufficient pressure resistance against internal pressure. Additionally, excellent processability of the propylene random copolymer material is required in order to facilitate pipe extrusion as well as injection moulding of fittings. To increase the stiffness of a propylene random copolymer material to the required level, the amount of comonomer in the polymer can be decreased which, however, has a negative effect on the toughness of the material. Especially random propylene polymer grades for hot and cold water applications often do not have satisfactory impact resistance, particularly at low temperatures.

Another commonly used approach to improve the impact performance while keeping the stiffness on a high level is to produce block copolymers in which ethylene rich rubber particles are dispersed in a homopolypropylene matrix. However, in pressure pipe applications, block copolymers are not preferred since the rubber particles are weak domains against internal pressure leading to insufficient pressure resistance of the pipes.

Stiffness/toughness balance of bimodal PPRC materials were significantly improved with multimodal reactor design, where comonomer rich material produced in a second reactor improves the toughness of the material without significantly sacrificing the stiffness.

Alternatively, impact modifiers such as for example polyethylene (PE) or Styrene-EthyleneButylene-Styrene (SEBS) can be added to the propylene random copolymers to improve the impact performance which, however, also has a negative effect on the stiffness and, therefore, the pressure resistance.

Accordingly, there is a need in the art for propylene copolymer materials showing an improved impact behavior without sacrificing the stiffness.

Therefore, it is an object of the present invention to provide a propylene copolymer applicable for pipe applications which has a highly feasible balance between impact and stiffness properties which balance preferably contributes to pressure resistance.

Accordingly, the instant invention relates to a polypropylene composition comprising

a base resin (A) and a nucleating agent (B),

wherein the base resin (A) comprises

i) 90.0 to 99.9 wt.% of a bimodal propylene copolymer (PP) with at least one comonomer being ethylene based on the total weight of the base resin (A), preferably 92.0 to 99.5 wt.%, more preferably 95.0 to 99.0 wt.%, most preferably 96.0 to 98.0 wt.%,

wherein the bimodal propylene copolymer (PP) comprises

(PP1) a first propylene copolymer component and

(PP2) a second propylene copolymer component, and

wherein the first propylene copolymer component (PP1) is different from the second propylene copolymer component (PP2), and

wherein the weight ratio of the first propylene copolymer component (PP1) including an optional prepolymer component to the second propylene copolymer component (PP2) is from 30:70 to 70:30, and

ii) 0.1 to 10 wt.% of a polyethylene having a density of equal or below 940 kg/m$^3$ based on the total weight of the base resin (A), preferably 0.5 to 8.0 wt.%, more preferably 1.0 to 5.0 wt.%, most preferably 2.0 to 4.0 wt.%, and

wherein the polypropylene composition has

(a) a melt flow rate MFR$_2$ (2.16 kg, 230°C) of 0.15 to 0.50 g/10 min, determined according to ISO 1133 at 230 °C and a load of 2.16 kg,

(b) a total ethylene content of 5.0 to 12.0 wt.% based on the total weight of the polypropylene composition determined as described in the specification,

(c) a content of xylene cold solubles (XCS) of equal to or below 10.0 wt.% based on the total weight of the polypropylene composition determined according to ISO 16152, and

(d) a Charpy Notched Impact Strength at 23°C of 50.0 kJ/m$^2$ to 100 kJ/m$^2$ and a Charpy Notched Impact Strength at 0°C of at least 5.0 kJ/m$^2$ both determined according to ISO 179/eA:2000 using notched injection moulded type 1A specimens.

It has surprisingly been found that the polypropylene composition according to the invention has an advantageous property balance between stiffness and impact as can be seen from the Flexural Modulus, the Tensile Modulus for stiffness and from the Charpy Notched Impact Strength at cold temperature 0°C and also at room temperature. The balance between the Flexural Modulus, the Tensile Modulus and the Charpy Notched Impact Strength provides sufficient stiffness and good impact properties to the polypropylene composition of the invention which balance preferably contribute to pressure resistance as shown in experimental part making it highly suitable for pipe applications, more preferably for hot and cold water pressure pipe applications.

Further preferably, the present polypropylene composition provides advantageous pressure resistance of pipes obtained which is required for pressure pipe applications both at room temperature (20°C) as well as elevated temperature (95°C).

The present polypropylene composition has preferably also an advantageous processing behavior in terms of pipe extrusion processability as can be seen from the rheological properties in particular from the complex viscosity at 300 rad/s, eta*$_{300}$.

The invention is further directed to a process for producing a polypropylene composition wherein the bimodal propylene copolymer (PP) with at least one comonomer being ethylene is polymerized in a multistage polymerization process in the presence of

(I) a solid catalyst component comprising a magnesium halide, a titanium halide and an internal electron donor; and

(II) a cocatalyst comprising an aluminium alkyl and optionally an external electron donor, and

(III) an optional nucleating agent (B), preferably in the presence of a nucleating agent (B);

the multistage process comprising the steps of

(a) continuously polymerizing propylene together with a comonomer selected from alpha-olefins with 2 or 4 to 8 carbon atoms, preferably ethylene, in a first polymerization stage by introducing streams of propylene, hydrogen and ethylene into the first polymerization stage at a temperature of 60 to 80°C and a pressure of 3000 to 6500 kPa to produce a first propylene copolymer component, wherein said first propylene copolymer component (PP1) preferably has a melt flow rate MFR$_2$ 0.4 to 2.0 g/10 min (2.16 kg; 230°C; ISO 1133);

(b) withdrawing from the first polymerization stage a stream comprising said first propylene copolymer component (PP1) and transferring said stream into a second polymerization stage;

(c) polymerizing propylene together with a comonomer selected from alpha-olefins with 2 or 4 to 8 carbon atoms, preferably ethylene, in said second polymerization stage by introducing streams of propylene, ethylene and optionally hydrogen into said second polymerization stage at a temperature of 70 to 90°C and a pressure of 1000 to 3000 kPa to produce a bimodal propylene copolymer (PP) of said first propylene copolymer component (PP1) and a second propylene copolymer component (PP2);

(d) continuously withdrawing a stream comprising said bimodal propylene copolymer (PP) from the second polymerization stage and optionally mixing said bimodal propylene copolymer (PP) with additives; and

(e) extruding said bimodal propylene copolymer mixture into pellets, which have a melt flow rate $MFR_2$, (2.16kg; 230°C; ISO 1133) of 0.15 to 0.5 g/10min,

and wherein the first propylene copolymer component (PP1) is different from the second propylene copolymer component (PP2), and preferably has a higher MFR than the second propylene copolymer component (PP2).

The invention further provides a polypropylene composition obtainable by said process.

The invention is further directed to an article comprising the polypropylene composition according to the invention.

The invention is further directed to the use of the polypropylene composition according to the invention for the production of an article.

In the following, the invention is described in more detail:

**Definitions**

A polypropylene composition according to the invention denotes a polymer derived from at least 50 mol-% propylene monomer units and additional comonomer units.

A propylene copolymer denotes a polymer consisting of propylene monomer units and comonomer units in an amount of at least 0.1 mol%. In a propylene random copolymer the comonomer units are randomly distributed in the polymer chain.

A ethylene copolymer denotes a polymer consisting of ethylene monomer units and comonomer units in an amount of at least 0.1 mol%. An ethylene homopolymer denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

The term 'different' denotes that a polymeric component differs from another polymeric component in at least one measurable property. Suitable properties for differentiating polymeric components are weight average molecular weight, melt flow rate $MFR_2$, density or comonomer content.

The term 'base resin (A)' denotes the polymeric component of the composition.

**General**

Base resin

The base resin (A) comprises i) a bimodal propylene copolymer (PP) and ii) a polyethylene (PE), more particularly 90.0 to 99.9 wt.% of a bimodal propylene copolymer (PP) with at least one comonomer being ethylene (referred herein also as propylene copolymer) based on the total weight of the base resin (A) and ii) 0.1 to 10 wt.% of a polyethylene (PE) having a density of equal or below 940 kg/m$^3$ based on the total weight of the base resin (A). The bimodal propylene copolymer (PP) comprises (PP1) a first propylene copolymer component and (PP2) a second propylene copolymer component, wherein the first propylene copolymer component (PP1) is different from the second propylene copolymer component (PP2), and wherein the weight ratio of the first propylene copolymer component (PP1) including an optional prepolymer component to the second propylene copolymer component (PP2) is from 30:70 to 70:30.

The bimodal propylene copolymer (PP) and the polyethylene (PE) are further described below.

Preferably, the base resin (A) comprises 92.0 to 99.5 wt.%, more preferably 95.0 to 99.0 wt.%, most preferably 96.0 to 98.0 wt.% of the propylene random copolymer (PP) based on the total weight of the base resin (A) and 0.5 to 8.0 wt.%, more preferably 1.0 to 5.0 wt.%, most preferably 2.0 to 4.0 wt.% of a polyethylene having a density of equal or below 940 kg/m$^3$ based on the total weight of the base resin (A).

Preferably, the base resin (A) according to the present invention comprises the propylene random copolymer (PP) and the polyethylene (PE) in a weight ratio of 92.0:8.0 to 99.5:0.5, more preferably in a weight ratio of 95.0:5.0 to 99.0:1.0, still more preferably in a 96.0:4.0 to 98.0:2.0.

Preferably the amount of the sum of the propylene random copolymer (PP) and the polyethylene (PE) is at least 90 wt.%, more preferably at least 95 wt.%, still more preferably at least 98 wt.% and up to 100 wt.%, based on the total amount of the base resin (A).

In one embodiment of the present invention the base resin consists of the bimodal propylene copolymer (PP) and the polyethylene (PE) as defined above and further below.

In a further embodiment of the present invention the base resin may further comprise further polymer components different to the bimodal propylene copolymer (PP) and the polyethylene (PE) as defined above and further below. It is preferred that the base resin (A) of the present invention does - apart from the propylene random copolymer (PP) and the polyethylene (PE) - not contain any further polymeric material in an amount exceeding 10 wt.%, preferably in an amount exceeding 5.0 wt.%, more preferably in an amount exceeding 2.5 wt.%, still more preferably in an amount exceeding 1.5 wt.%, based on the overall weight of the base resin (A).

More preferably, the base resin of the present invention consists of the bimodal propylene copolymer (PP) and the polyethylene (PE) as described above and further defined below.

"Polymeric material" excludes herein any carrier polymer(s) of optional additive, e.g. master batch(es) of additive(s) together with the carrier polymer, optionally present in the polymer composition. Such optional carrier polymer(s) are calculated to the amount of the respective additive based on the amount (100 %) of the polymer composition. Polymers which are part of additive mixtures, e.g. carrier polymers in masterbatches, are excluded from the definition of "polymeric material".

Preferably, the base resin (A) has a total ethylene content of 5.0 to 12.0 wt.%, preferably 5.1 to 10.0 wt.%, more preferably 5.5 to 9.0 wt.% based on the total weight of the base resin (A) determined as described below.

Polypropylene Composition

In addition to the base resin (A) the polymer composition comprises a nucleating agent (B), and may comprise and preferably comprises usual additives for utilization with polyolefins.

A nucleating agent denotes herein a compound or composition which is added on purpose to increase the crystallization rate within the solid polymer and lead to an increased degree of crystallinity (and often to a smaller crystal size) of the solid polymer.

The nucleating agent (B) used in the polypropylene composition of the invention is preferably a polymeric nucleating agent, preferably a polymer of vinyl compound, more preferably a polymeric nucleating agent obtainable by polymerizing vinylcycloalkane monomers or vinylalkane monomers.

The polymeric nucleating agent is more preferably a polymerized vinyl compound according to the following formula

$$CH_2=CH\text{-}CHR^1R^2 \qquad (BI)$$

wherein $R^1$ and $R^2$ together form a 5- or 6-membered saturated, unsaturated or aromatic ring, optionally containing substituents, or independently represent an alkyl group comprising 1 to 4 carbon atoms, whereby in case $R^1$ and $R^2$ form an aromatic ring, the hydrogen atom of the - $CHR^1R^2$ moiety is not present.

Even more preferably, the polymeric nucleating agent is selected from: vinyl cycloalkane polymer, preferably vinyl cyclohexane (VCH) polymer, vinyl cyclopentane polymer, 3-methyl-1-butene polymer and vinyl-2-methyl cyclohexane polymer. The most preferred nucleating agent is vinyl cyclohexane (VCH) polymer.

As mentioned above, in a preferred embodiment, nucleating agent is a polymeric nucleating agent, more preferably a polymer of vinyl compound according to the formula (BI) as defined above, even more preferably vinyl cyclohexane (VCH) polymer.

The amount of nucleating agent preferably is not more than 10000 ppm by weight (means parts per million based on the total weight of the polypropylene composition (100 wt.%), also abbreviated herein shortly as ppm), more preferably not more than 6000 ppm, even more preferably not more than 5000 ppm, based on the total weight of the bimodal propylene copolymer (PP) (100 wt.%).

The amount of the nucleating agent still more preferably is not more than 500 ppm, preferably is from 0.025 to 200 ppm, and more preferably is from 0.1 to 200 ppm, more preferably is from 0.3 to 200 ppm, most preferably is from 0.3 to 100 ppm, based on the total weight of the bimodal propylene copolymer (PP) (100 wt.%).

In the preferred embodiment the nucleating agent is a polymeric nucleating agent, most preferably a polymer of vinyl compound according to formula (BI) as defined above, even more preferably vinyl cyclohexane (VCH) polymer as defined above, and the amount of said nucleating agent (B) is not more than 200 ppm, more preferably is from 0.025 to 200 ppm, and more preferably is from 0.1 to 200 ppm, more preferably is from 0.3 to 200 ppm, most preferably is from 0.3 to 100 ppm, based on the total weight of the bimodal propylene copolymer (PP) (100 wt.%).

The nucleating agent may be introduced to the propylene random copolymer (PP) e.g. during the polymerization process of the propylene random copolymer (PP) or may be incorporated to the propylene random copolymer (PP) by mechanical blending with a nucleated polymer, containing the polymeric nucleating agent (so-called master batch technology) or by mechanical blending of the bimodal propylene copolymer (PP) with the nucleating agent as such.

Thus, the nucleating agent can be introduced to the bimodal propylene copolymer (PP) during the polymerization process of the bimodal propylene copolymer (PP). The nucleating agent is preferably introduced to the bimodal propylene copolymer (PP) by first polymerizing the above defined vinyl compound according to formula (BI) as defined above, even more preferably vinyl cyclohexane (VCH), in the presence of a catalyst system as described above, comprising a solid Ziegler Natta catalyst component, a cocatalyst and optional external donor, and the obtained reaction mixture of the polymer of the vinyl compound according to formula (BI) as defined above, even more preferably vinyl cyclohexane (VCH) polymer, and the catalyst system is then used for producing the bimodal propylene copolymer (PP).

General preparation of such modified catalyst system is disclosed e.g. in EP 1 028 984 or WO 00/6831.

In another embodiment the polymeric nucleating agent is added with the so called masterbatch technology, where an already nucleated polymer, preferably a propylene homopolymer, containing the polymeric nucleating agent (masterbatch) is blended with the bimodal propylene copolymer (PP). Such a masterbatch is preferably prepared by polymerizing propylene in a sequential polymerization process.

Usual additives are acid scavengers, antioxidants, colorants, light stabilisers, plasticizers, slip agents, anti-scratch agents, dispersing agents, processing aids, lubricants, pigments, fillers, and the like. Each additive can be used e.g. in conventional amounts, the total amount of additives present in the propylene composition being preferably as defined below.

Such additives are commercially available and for example described in "Plastic Additives Handbook", 6* edition 2009 of Hans Zweifel (pages 1141 to 1190).

The total amount of optional further additives is preferably between 0.0001 and 10 wt%, preferably 0.0001 and 5.0 wt%, preferably 0.0001 and 2.5 wt%, more preferably between 0.0001 and 1.5 wt%, still more preferably between 0.0001 and 1.0 wt%, based on the total weight of the polypropylene composition (100 wt%). In case the nucleating agent (B) and/or any optional additive(s) is added in an optional masterbatch, then the carrier material, e.g. carrier polymer, of the additive is calculated to the (total) amount of the additive(s), based on the total weight of the polypropylene composition (100 wt%).

Part or all of the optional additives may be incorporated to the base resin, in particular to bimodal propylene copolymer (PP), by the base resin producer during the production of base resin, e.g. during the pelletizing step of the base resin powder obtained from the polymerization reactor or by the article producer during the compounding step of the polymer composition.

Hence, the polypropylene composition of the invention comprises, preferably consists of, the base resin (A) as the polymeric component(s) comprising a bimodal propylene copolymer (PP) and a polyethylene (PE) as described above and further defined below, a nucleating agent (B) and optional further additives.

Accordingly, the polypropylene composition of the invention is a bimodal polypropylene composition.

Thereby, the composition comprises, preferably consists of, a base resin (A) and a nucleating agent (B), wherein the base resin (A) comprises, preferably consists of, i) 90.0 to 99.9 wt.% of a bimodal propylene copolymer (PP) with at least one comonomer being ethylene (referred herein also as propylene copolymer) based on the total weight of the base resin (A) and ii) 0.1 to 10 wt.% of a polyethylene having a density of equal or below 940 kg/m$^3$ based on the total weight of the base resin (A), and optional further additives, as defined below.

It is preferred that the inventive polypropylene composition comprises at least 90 wt.%, more preferably at least 95 wt.%, even more preferably at least 98 wt.% and up to 99.9 wt.% of the base resin (A), based on the total weight of the inventive polypropylene composition. It is especially preferred that polypropylene composition according to the invention consists of the base resin (A) as described above, a nucleating agent (B) and optional further additives, as defined above. It is further preferred that the base resin consists of the bimodal propylene copolymer (PP) and the polyethylene (PE) as described above and further defined below and thereby the polypropylene composition according to the invention preferably consists of the bimodal propylene copolymer (PP), the nucleating agent (B), the polyethylene (PE) and optional further additives, as defined above or below.

The polypropylene composition of the invention has a melt flow rate MFR$_2$ (2.16 kg, 230°C) of from 0.15 to 0.5 g/10 min, preferably of from 0.17 to 0.4 g/10 min, more preferably of from 0.20 to 0.35 g/10 min, determined according to ISO 1133 at 230 °C and a load of 2.16 kg.

The polypropylene composition of the invention has a total ethylene content of 5.0 to 12.0 wt. %, preferably 5.5 to 10 wt%, more preferably 6.0 to 8.0 wt%, based on the total weight of the composition determined as described below.

Further, the polypropylene composition of the invention has a content of xylene cold solubles (XCS) of equal to or below 10.0 wt.%, preferably of 4.0 to 9.7 wt.%, more preferably of 5.0 to 9.4 wt.%, based on the total weight of the polypropylene composition determined according to ISO 16152 at 25°C.

Further, the polypropylene composition has a Charpy Notched Impact Strength at 23°C of 50.0 kJ/m$^2$ to 100.0 kJ/m$^2$, preferably of 55.0 to 95.0 kJ/m$^2$ more preferably of 60.0 to 90.0 kJ/m$^2$, determined according to ISO 179/1eA:2000 using notched injection moulded type 1A specimens.

Further, the polypropylene composition has a Charpy Notched Impact Strength at 0°C of at least 5.0 kJ/m$^2$, preferably of at least 5.5 kJ/m$^2$ and more preferably of at least 6.0 kJ/m$^2$, determined according to ISO 179/1eA:2000 using notched injection moulded type 1A specimens. The upper limit of the Charpy Notched Impact Strength at 0°C is usually not higher than 15 kJ/m$^2$.

Further, the polypropylene composition preferably has a flexural modulus of 700 to 1400 MPa, more preferably 740 to 1200 MPa and most preferably 780 to 1100 MPa determined according to ISO 178 using injection moulded 80 x 10 x 4.0 mm$^3$ (length x width x thickness) specimens.

Further, the polypropylene composition preferably has a tensile modulus of from 700 to 1200 MPa, preferably 750 to 1100 MPa, more preferably 800 to 1000 MPa determined according to ISO 527-2 using injection molded type 1A specimens.

Further, the polypropylene composition preferably has a melting temperature $T_m$ of from 135°C to 155°C, preferably 137° C to 152° C, preferably 140° C to 150° C determined according to ISO 11357-3.

Still further, the polypropylene composition preferably has a crystallization temperature $T_c$ of not less than 100° C, preferably 105° C to 130° C, preferably 107° C to 127° C, preferably 110° C to 125° C determined according to ISO 11357 -3.

Furthermore, the polypropylene composition preferably has a complex viscosity at 300 rad/s eta*$_{300}$ of 400 Pa·s to 1000 Pa·s, more preferably 450 Pa·s to 900 Pa·s, most preferably 500 Pa·s to 800 Pa·s determined according to ISO 6721-1 and 6721-10.

Furthermore, the polypropylene composition preferably has a complex viscosity at 0.05 rad/s eta*$_{0.05}$ of 60,000 Pa·s to 100,000 Pa·s, more preferably 70,000 Pa·s to 95,000 Pa·s, most preferably 75,000 Pa·s to 90,000 Pa·s determined according to ISO 6721-1 and 6721-10.

Furthermore, the polypropylene composition preferably has a shear thinning index SHI$_{(2.7/210)}$ of 80 to 200, more preferably 100 to 180, more preferably 110 to 160 determined according to ISO 6721-1 and 6721-10.

Furthermore, the polypropylene composition preferably has a weight average molecular weight Mw of 400 kg/mol to 800 kg/mol determined according to ISO 16014-1:2003 and ISO 16014-4:2003.

Furthermore, the polypropylene composition preferably has a number average molecular weight Mn of 30 kg/mol to 60 kg/mol determined according to ISO 16014-1:2003 and ISO 16014-4:2003

Furthermore, the polypropylene composition preferably has a molecular weight distribution (MWD = Mw/Mn wherein Mn is the number average molecular weight and Mw is the weight average molecular weight) of 10 to 20, more preferably of 11 to 19, most preferably 12 to 18 determined according to ISO 16014-1:2003 and ISO 16014-4:2003.

Furthermore, the polypropylene composition preferably has a pressure resistance of at least 100 h, more preferably 500 h, most preferably of at least 1100 h, determined according to ISO 1167-1:2006 at a hoop stress of 4.5 MPa and 95 °C. The upper limit is usually not higher than 10,000 hours.

Furthermore, the polypropylene composition preferably has a pressure resistance of at least 50 h, more preferably of at least 100 h, most preferably of at least 400 h, determined according to ISO 1167-1:2006 at a hoop stress of 14 MPa and 20 °C. The upper limit is usually not higher than 10,000 hours.

Furthermore, the polypropylene composition preferably has a pressure resistance of at least 1 h, more preferably of at least 2 h, most preferably of at least 5 h, determined according to ISO 1167-1:2006 at a hoop stress of 16 MPa and 20 °C. The upper limit is usually not higher than 2,000 hours.

Furthermore, the polypropylene composition preferably comprises a continuous matrix phase and a dispersed phase distributed in the matrix phase, wherein the dispersed phase is a particle comprising a core and a shell determined using Atomic Force Microscopy (AFM) imaging coupled with NanoIR analysis as described below. Preferably the mean particle size of the dispersed phase particles is 50 to 600 nm, more preferably 80 to 550 nm, even more preferably 100 to 500 nm determined using AFM imaging coupled with NanoIR analysis as described below. Furthermore, preferably the mean inter-particle distance is 20 to 200 nm, more preferably 30 to 190 nm, even more preferably 40 to 180 nm determined using AFM imaging coupled with NanoIR analysis as described below.

Preferably, in the polypropylene composition the matrix phase comprises polypropylene copolymer and the dispersed phase comprise a mixture of polypropylene and polyethylene.

Bimodal propylene copolymer (PP)

The bimodal propylene copolymer (PP) with at least one comonomer being ethylene is a propylene random copolymer. The bimodal propylene random copolymer (PP) is the major component of the inventive polypropylene composition.

A propylene random copolymer denotes a copolymer of propylene monomer units and comonomer units in which the comonomer units are randomly distributed in the polymeric chain. Thereby, a propylene random copolymer includes a fraction, which is insoluble in xylene - xylene cold insoluble (XCU) fraction, in an amount of at least 70 wt%, more preferably of at least 80 wt%, still more preferably of at least 85 wt% and most preferably of at least 91.8 wt%, based on the total amount of the propylene random copolymer.

As known for skilled person, a random copolymer is different from heterophasic polypropylene which is a propylene copolymer comprising a propylene homo or random copolymer matrix component (1) and an elastomeric copolymer component (2) of propylene with one or more of ethylene and C4-C8 alpha-olefin copolymers, wherein the elastomeric (amorphous) copolymer component (2) is dispersed in said propylene homo or random copolymer matrix polymer (1).

The presence of elastomeric phase or the so called inclusions are for instance visible by high resolution microscopy, like electron microscopy or atomic force microscopy. The bimodal random propylene copolymer (PP) according to the invention does not contain an elastomeric polymer phase. Thereby, the term bimodal propylene copolymer (PP) according to the present invention excludes all heterophasic systems. In other words the bimodal propylene random copolymer (PP) according to the invention does not comprise an elastomeric phase. Accordingly, the bimodal propylene random copolymer (PP) is a monophasic propylene random copolymer.

Usually, a bimodal propylene polymer comprising at least two propylene polymer fractions (components), which have been produced under different polymerization conditions resulting in different (weight average) molecular weights and/or different comonomer contents for the fractions, preferably produced by polymerizing in multiple polymerization stages with different polymerization conditions, is referred to as "multimodal". The prefix "multi" relates to the number of different polymer fractions the propylene polymer is consisting of. As an example of multimodal polypropylene, a propylene polymer consisting of two fractions only is called "bimodal", whereas a propylene polymer consisting of three fractions only is called "trimodal".

The term "different" means that the propylene polymer fractions differ from each other in at least one property, preferably in the weight average molecular weight or comonomer content or both, more preferably at least in the weight average molecular weight.

The form of the molecular weight distribution curve, i.e. the appearance of the graph of the polymer weight fraction as function of its molecular weight, of such a multimodal propylene polymer is at least distinctly broadened in comparison with the curves for the individual fractions.

The bimodal propylene copolymer (PP) used in the present invention is a bimodal propylene random copolymer comprising a first propylene copolymer component (PP1) and a second propylene copolymer component (PP2). Preferably, the bimodal propylene random copolymer (PP) consists of the two propylene random copolymer fractions (PP1) and (PP2).

The propylene random copolymer (PP) used in the polypropylene composition of the invention comprises at least one comonomer being ethylene.

The propylene random copolymer (PP) may comprise only ethylene as comonomer but may further comprise one or more further types of comonomers.

Such further comonomers of said propylene random copolymer (PP) may preferably be selected from $C_2$ and $C_4$ to $C_6$ alpha-olefins.

Preferably, the propylene random copolymer (PP) comprises only ethylene as comonomer.

Both fractions (PP1) and (PP1) are propylene random copolymer fractions, wherein the first propylene copolymer component (PP1) is different from the second propylene copolymer component (PP2).

It is preferred that the bimodal propylene random copolymer (PP), which is preferably the propylene random copolymer with only ethylene as comonomer, comprises, preferably consists of, at least a propylene random copolymer having a low molecular weight (low molecular weight (LMW) fraction) and a propylene random copolymer having a high molecular weight (high molecular weight (HMW) fraction). Thereby, the LMW fraction has a lower weight average molecular weight than the HMW fraction.

It is well known that melt flow rate (MFR) of a polymer is an indication of the weight average molecular weight (Mw) of the polymer, the higher the MFR the lower the Mw of the polymer and, respectively, the lower the MFR the higher the Mw of the polymer. Accordingly, the MFR of the low molecular weight fraction is higher than the MFR of the high molecular weight fraction.

Preferably, the first propylene copolymer component (PP1) has a higher $MFR_2$ than the second propylene copolymer component (PP2). Accordingly, preferably the first propylene copolymer component (PP1) is the low molecular weight (LMW) fraction and the second propylene copolymer component (PP2) is the high molecular weight (HMW) fraction.

More preferably, the first propylene copolymer component (PP1) has a melt flow rate $MFR_2$ of 0.4 to 2.0 g/10 min, more preferably 0.5 to 1.5 g/10 min determined according to ISO 1133 at 230 °C and a load of 2.16 kg.

The bimodal propylene copolymer (PP) has preferably a melt flow rate $MFR_2$ of 0.15 to 0.50 g/10 min, more preferably 0.17 to 0.40 g/10 min, most preferably 0.20 to 0.35 g/10 min determined according to ISO 1133 at 230 °C and a load of 2.16 kg.

The $MFR_2$ and thus the molecular weight of the of the first propylene random copolymer component (PP1) and the second propylene random copolymer component (PP2) as well as the bimodal propylene random copolymer (PP) may be controlled by the amount of chain transfer agent and the amount of (PP1) and (PP2) in the final polymer, i.e. the split.

It is further preferred that the $MFR_2$ of the first and second propylene random copolymer components (PP1) and (PP2) and the $MFR_2$ of the bimodal propylene random copolymer (PP) have a certain ratio. More preferably the ratio of the $MFR_2$ of the bimodal propylene random copolymer (PP) to the $MFR_2$ of the first propylene copolymer component (PP1), $MFR_{2\,PP}/MFR_{2\,PP1}$ is 0.15 to 0.50, more preferably 0.20 to 0.48.

The first propylene copolymer component (PP1) and the second propylene copolymer component (PP2) are propylene random copolymers which may have essentially the same or different comonomer content. It is thereby preferred that the comonomer content of the high molecular weight fraction, i.e. the second propylene copolymer component (PP2) is equal to or higher than, preferably higher than, the comonomer content of the low molecular weight fraction, i.e. the first propylene copolymer component (PP1). It is further preferred that the comonomer content of the obtained bimodal propylene random copolymer (PP) is higher than the comonomer content of the first propylene copolymer component (PP1).

The comonomer content of first propylene copolymer component (PP1) is preferably 1.0 to 4.0 wt%, more preferably 1.5 to 3.5 wt%, even more preferably 1.7 to 3.1 wt%, most preferably 1.9 to 3.0 wt%, based on the total weight of the first propylene copolymer component (PP1).

The comonomer content of the second propylene copolymer component (PP2) is preferably 4.0 to 9.0 wt.%, more preferably 4.2 to 8.0 wt%, most preferably 4.5 to 7.5 wt% based on the total weight of the second propylene copolymer component (PP2).

The comonomer content of the first propylene copolymer component (PP1) is preferably 1.5 to 6.0 mol%, more preferably 2.3 to 5.5 mol%, still more preferably 2.5 to 5.0 mol%, most preferably 3.0 to 4.8 mol%, based on the total content of monomeric units in the first propylene copolymer component (PP1).

The comonomer content of the second propylene copolymer component (PP2) is preferably 6.1 to 15.0 mol%, more preferably 6.5 to 12.0 mol%, most preferably 6.8 to 11.0 mol%, , based on the total content of monomeric units in the second propylene copolymer component (PP2).

In a preferred embodiment, the first propylene random copolymer component (PP1) has a lower molecular weight than the second propylene random copolymer component (PP2), i.e. the first propylene random copolymer component (PP1) is the low molecular weight (LMW) fraction and the second propylene random copolymer component (PP2) is the high molecular weight (HMW) fraction and the second propylene random copolymer component (PP2) has higher content of comonomer, preferably ethylene comonomer, than the the first propylene random copolymer component (PP1).

In this preferred embodiment the content of the comonomer, preferably ethylene comonomer, in the first and second propylene copolymer components (PP1) and (PP2), is within the preferred ranges as defined above, and preferably ethylene is the only comonomer used in both (PP1) and (PP2), i.e. no further comonomer is present. Then, preferably, the content of ethylene comonomer in the first and second propylene copolymer components (PP1) and (PP2), is within the preferred ranges as defined above.

The total comonomer content of the bimodal propylene random copolymer (PP) is preferably 3.0 to 5.0 wt%, more preferably 3.5 to 4.8 wt% based on the total weight of the bimodal propylene copolymer (PP).

The total comonomer content of the bimodal propylene random copolymer (PP) is preferably 4.0 to 9.5 mol%, more preferably 5.0 to 9.0 mol%, based on the total molar content of the propylene random copolymer (PP).

The comonomer content of the first propylene random copolymer component (PP1) and the second propylene random copolymer component (PP2) as well as the bimodal propylene random copolymer (PP) may be controlled by the amount of comonomer in (PP1) and (PP2) and the amount of (PP1) and (PP2) in the final polymer, i.e. the split.

It is further preferred that the comonomer content of first and second propylene copolymer components (PP1) and (PP2) and the total comonomer content of the bimodal propylene random copolymer (PP) have a certain ratio.

Preferably, the weight ratio of the comonomer content of the first propylene random copolymer component (PP1) to the comonomer content of the bimodal propylene copolymer (PP), both expressed in wt%, $Co_{PP1}/Co_{PP}$, is 0.35 to 0.70, more preferably 0.40 to 0.65, most preferably 0.52 to 0.62.

Furthermore, preferably the weight ratio of the comonomer content of the first propylene random copolymer component (PP1) to the comonomer content of the second propylene random copolymer component (PP2), both expressed in wt%, $Co_{PP1}/Co_{PP2}$, is 0.30 to 0.55, more preferably 0.32 to 0.52, even more preferably 0.34 to 0.50, most preferably 0.36 to 0.50.

According to a preferred embodiment of the invention the weight ratio of the comonomer content of the first propylene random copolymer component (PP1) to the comonomer content of the bimodal propylene copolymer (PP), both expressed in wt%, $Co_{PP1}/Co_{PP}$ is 0.35 to 0.70, more preferably 0.40 to 0.65, most preferably 0.52 to 0.62 and the ratio $MFR_{2\,PP}/MFR_{2\,PP1}$ is 0.15 to 0.50, more preferably 0.20 to 0.48.

In case ethylene is the only comonomer used in both (PP1) and (PP2), which is preferred, i.e. no further comonomer is present, the total content of ethylene of the bimodal propylene random copolymer (PP) and accordingly, the weight ratio of the ethylene content of the first propylene random copolymer component (PP1) to the ethylene content of the bimodal propylene copolymer (PP), both expressed in wt%, or the weight ratio of the ethylene content of the first propylene random copolymer component (PP1) to the ethylene content of the second propylene random copolymer component (PP2), both expressed in wt%, are within the preferred ranges as defined above for the total comonomer content and respective weight ratios.

The weight ratio of the first propylene random copolymer component (PP1) including an optional prepolymer component to the second propylene random copolymer component (PP2) is from 30:70 to 70:30. Preferably, the weight ratio of the first propylene random copolymer component (PP1) including an optional prepolymer component to the second propylene random copolymer component (PP2) is from 38:62 to 60:40, preferably from 40:60 to 50:50, most preferably from 42:58 to 46:54 .

The first propylene random copolymer component (PP1) is preferably present in the bimodal propylene copolymer in an amount of 30 to 70 wt%, more preferably in an amount of 38 to 60 wt%, more preferably in an amount of 40 to 50 wt%, and most preferably in an amount of 42 to 46 wt%, based on the total amount of the propylene random copolymer (PP) (100wt%). The second propylene random copolymer component (PP2) is preferably present in the propylene random copolymer in an amount of 70 to 30 wt%, more preferably in an amount of 62 to 40 wt%, more preferably in an amount of 60 to 50 wt% and most preferably in an amount of 58 to 54 wt%, based on the total amount of the propylene random copolymer (PP) (100 wt%).

The bimodal propylene random copolymer (PP) may further comprise a prepolymer fraction. In case of the presence of a prepolymer fraction, said fraction is calculated to the amount (wt%) of the low molecular weight fraction or high molecular weight fraction, preferably to the amount of low molecular weight fraction. The prepolymer fraction can be a propylene homopolymer or copolymer.

The bimodal propylene random copolymer (PP) preferably has a density of 890 to 910 kg/m$^3$, preferably 895 to 905 kg/m$^3$.

Further, the bimodal propylene random copolymer (PP) preferably has a content of xylene cold solubles (XCS) of 4.0 to 9.5 wt%, more preferably of 5.0 to 8.0 wt.% based on the total weight of the bimodal propylene random copolymer (PP) determined according to ISO 16152 at 25°C.

**Process**

The polypropylene composition of the invention is preferably produced in a continuous multistage process in a conventional manner. It is to be understood that as soon as the inventors have found the advantageous property balance resulting to the polypropylene composition, then for industrial scale production it is within the skills of a skilled person to adjust process parameters and controls to obtain the properties of the polypropylene composition. The process preferably comprises at least two polymerisation stages.

Accordingly, the invention relates to a process for producing a polypropylene composition wherein the bimodal propylene random copolymer (PP) with at least one comonomer being ethylene is polymerized in a multistage polymerization process in the presence of

(I) a solid catalyst component comprising a magnesium halide, a titanium halide and an internal electron donor; and

(II) a cocatalyst comprising an aluminium alkyl and optionally an external electron donor, and

(III) an optional nucleating agent (B), preferably in the presence of a nucleating agent (B);

the multistage process comprising the steps of

(a) continuously polymerizing propylene together with a comonomer selected from alpha-olefins with 2 or 4 to 8 carbon atoms, preferably ethylene, in a first polymerization stage by introducing streams of propylene, hydrogen and ethylene into the first polymerization stage at a temperature of 60 to 80°C and a pressure of 3000 to 6500 kPa to produce a first propylene random copolymer component (PP1), wherein said first propylene random copolymer has a melt flow rate MFR$_2$ 0.4 to 2.0 g/10min, (2.16 kg; 230°C; ISO 1133);

(b) withdrawing from the first polymerization stage a stream comprising said first propylene random copolymer component (PP1) and transferring said stream into a second polymerization stage;

(c) polymerizing propylene together with a comonomer selected from alpha-olefins with 2 or 4 to 8 carbon atoms, preferably ethylene, in said second polymerization stage by introducing streams of propylene, ethylene and optionally hydrogen into said second polymerization stage at a temperature of 70 to 90°C and a pressure of 1000 to 3000 kPa to produce a bimodal propylene random copolymer (PP) of said first propylene random copolymer component (PP1) and a second propylene random copolymer component (PP2);

(d) continuously withdrawing a stream comprising said bimodal propylene random copolymer (PP) from the second polymerization stage and optionally mixing said bimodal propylene copolymer with a polyethylene (PE) as described below or in the claims and optionally with additives; and

(e) extruding said bimodal random propylene copolymer together with conventional antioxidants, Ca-stearatemixture into pellets, which have a melt flow rate MFR$_2$, (2.16kg; 230°C; ISO 1133) of 0.15 to 0.5 g/10min,

and wherein the first propylene random copolymer component (PP1) is different from the second propylene random copolymer component (PP2), preferably the first propylene random copolymer component (PP1) has a higher MFR than the second propylene random copolymer component (PP2).

The polyethylene (PE) may be mixed with the bimodal propylene random copolymer before extrusion or may be melt blended with the bimodal random propylene copolymer pellets in a further step after the extrusion step (e). Preferably, the polyethylene (PE) is mixed with the bimodal propylene random copolymer before extrusion. Hence, preferably, the bimodal propylene random copolymer is extruded together with the polyethylene (PE) and optionally with additives into pellets which have a melt flow rate MFR$_2$, (2.16kg; 230°C; ISO 1133) of 0.15 to 0.5 g/10min.

It is especially preferred that the process according to the present invention includes the following process steps: (aa) polymerising a vinyl compound of the formula (BI) as defined above or below, preferably vinyl cyclohexane (VCH), in the presence of a catalyst system comprising the solid catalyst component (I) to obtain a modified catalyst system which is the reaction mixture comprising the solid catalyst component (I) and the produced polymer of the vinyl compound of formula (BI), preferably, and wherein, the weight ratio (g) of the polymer of the vinyl compound of the formula (BI) to the solid catalyst component (I) is up to 5 (5:1), preferably up to 3 (3:1) most preferably is from 0.5 (1:2) to 2 (2:1), and the obtained modified catalyst system is fed to polymerisation step (a) of the multistage process for producing the bimodal propylene copolymer (PP).

The process of the invention is described in details below:
Thereby, conventional polymerization techniques, e.g. gas phase, solution phase, slurry or bulk polymerization can be used.

In general, a combination of slurry (or bulk) and at least one gas phase reactor is often preferred for the polymerisation of the bimodal propylene random copolymer (PP). It is further preferred that the reactor order is slurry (or bulk) then one or more gas phase reactors.

In case of propylene polymerisation for slurry reactors, the reaction temperature will generally be in the range 60 to 110°C, e.g. 60 to 85 °C, the reactor pressure will generally be in the range 5 to 80 bar, e.g. 20 to 60 bar, and the residence time will generally be in the range 0.1 to 5 hours, e.g. 0.3 to 2 hours. The monomer is usually used as reaction medium.

For gas phase reactors, the reaction temperature used will generally be in the range 60 to 115 °C, e.g. 70 to 110 °C, the reactor pressure will generally be in the range 10 to 25 bar, and the residence time will generally be 0.5 to 8 hours, e.g. 0.5 to 4 hours. The gas used will be the monomer optionally as mixture with a non-reactive gas such as nitrogen or propane.

In addition to actual polymerisation steps and reactors, the process can contain any additional polymerisation steps, like prepolymerisation step, and any further after reactor handling steps as known in the art.

It is preferred that the bimodal propylene random copolymer (PP) is produced in a sequential polymerization process comprising at least two polymerization zones operating at different conditions to produce the bimodal propylene random copolymer (PP). The polymerization zones may operate in slurry, solution, or gas phase conditions or their combinations. Suitable processes are disclosed, among others, in WO-A-98/58975, WO-A-98/58976, EP-A-887380 and WO-A-98/58977.

In a preferred embodiment, the prepolymerization is conducted in a continuous manner as bulk slurry polymerization in liquid propylene, i.e. the liquid phase mainly comprises propylene, with minor amount of other reactants and optionally inert components dissolved therein. Preferably the prepolymerization is conducted in a continuous stirred tank reactor or a loop reactor, preferably in a loop reactor.

The prepolymerization reaction is typically conducted at a temperature of 0 to 60 °C, preferably from 10 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The reaction conditions are well known in the art as disclosed, among others, in GB 1580635.

In the prepolymerization step it is also possible to feed comonomers into the prepolymerization stage. Examples of suitable comonomers are ethylene or alpha-olefins having from 4 to 8 carbon atoms. Especially suitable comonomers are ethylene, 1-butene, 1-hexene, 1-octene or their mixtures. Especially preferred is ethylene as comonomer.

In a preferred embodiment for polymerizing the bimodal propylene random copolymer (PP) the first propylene random copolymer component (PP1) is preferably produced in a first polymerization stage. Said first propylene random copolymer component (PP1) most preferably reflects the low molecular weight (LMW) fraction of the bimodal propylene random copolymer (PP) as defined above.

The first propylene random copolymer component (PP1) is produced by introducing a polymerization catalyst, optionally through the prepolymerization stage as disclosed above, into the first polymerization stage together with a first monomer mixture containing propylene and a comonomer selected from ethylene and alpha-olefins containing 4 to 8 carbon atoms. The content of the comonomers is controlled to obtain a desired comonomer content in the first propylene random copolymer. The comonomer content of said first propylene random copolymer component (PP1) preferably reflects the comonomer content of the low molecular weight (LMW) fraction of the bimodal propylene random copolymer (PP) as defined above.

The first propylene random copolymer component (PP1) produced in the first polymerization stage has preferably a $MFR_2$ of from 0.4 to 2.0 g/10 min. More preferably, the $MFR_2$ of the first propylene random copolymer component (PP1), preferably of the low molecular weight (LMW) fraction of the bimodal propylene random copolymer (PP), is 0.5 to 1.5 g/10 min. It is preferred that the $MFR_2$ of the first propylene random copolymer component (PP1) remains within these limits.

The polymerization in the first polymerization zone is preferably conducted in slurry in a loop reactor. For this reason the terms "first polymerization stage" and "loop reactor" may be used interchangeably within the context of the present invention. Then the polymer particles formed in the polymerization, together with the catalyst fragmented and dispersed within the particles, are suspended in the fluid hydrocarbon. The slurry is agitated to enable the transfer of reactants from the fluid into the particles. In loop reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

Slurry polymerization is preferably a so called bulk polymerization. By "bulk polymerization" is meant a process where the polymerization is conducted in a liquid monomer essentially in the absence of an inert diluent. However, as it is known to a person skilled in the art the monomers used in commercial production are never pure but always contain aliphatic hydrocarbons as impurities. For instance, the propylene monomer may contain up to 5 % of propane as an impurity. As propylene is consumed in the reaction and also recycled from the reaction effluent back to the polymerization, the inert components tend to accumulate, and thus the reaction medium may comprise up to 40 wt-% of other compounds than monomer. It is to be understood, however, that such a polymerization process is still within the meaning of "bulk polymerization", as defined above.

The temperature in the slurry polymerization is typically from 50 to 110 °C, preferably from 60 to 80 °C and more preferably from 65 to 75 °C. The pressure is from 1 to 150 bar, preferably from 10 to 100 bar and most preferably from 30 to 65 bar.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

Into the slurry polymerization stage other components are also introduced as it is known in the art. Thus, hydrogen is used to control the molecular weight of the polymer. Process additives, such as antistatic agent, may be introduced into the reactor to facilitate a stable operation of the process.

Preferably, the ratio of comonomer to propylene in the first polymerization stage is 0.2 to 20 mol/kmol, more preferably 0.3 to 15 mol/kmol, still more preferably 0.4 to 10 mol/kmol and most preferably 0.5 to 10 mol/kmol.

Preferably, the ratio of hydrogen to propylene in the first polymerization stage is 0.1 to 5.0 mol/kmol, more preferably 0.1 to 4.5 mol/kmol, still more preferably 0.2 to 4.0 mol/kmol and most preferably 0.3 to 3.0 mol/kmol.

The slurry is preferably conducted directly into a second polymerization stage, which preferably is a gas phase polymerization stage, to produce the second propylene random copolymer. By "directly" it is meant that the slurry is introduced from the loop reactor into the gas phase reactor without a flash step between the slurry and gas phase polymerization stages for removing at least a part of the reaction mixture from the polymer. Thereby, substantially the entire slurry stream withdrawn from the first polymerization stage is directed to the second polymerization stage. This kind of direct feed is described in EP-A-887379, EP-A-887380, EP-A-887381 and EP-A-991684. It is preferred that the whole slurry stream withdrawn from the loop reactor is directed into the gas phase reactor without any separation step in between. However, it is within the scope of the present invention to take small samples or sample streams from the polymer or from the fluid phase or from both for analyzing the polymer and/or the composition of the reaction mixture. As understood by the person skilled in the art, the volume of such sample streams is small compared to the total slurry stream withdrawn from the loop reactor and typically much lower than 1 % by weight of the total stream, such as at most 0.1 % or 0.01% or even 0.001 % by weight.

When the entire slurry stream from the first polymerization stage is introduced into the second polymerization stage then substantial amounts of propylene, comonomer and hydrogen are introduced into the second polymerization stage together with the polymer.

As discussed above, a certain amount of propylene and comonomer is introduced into the second polymerization stage from the first polymerization stage. However, this is generally not sufficient to maintain desired propylene and comonomer concentrations in the second polymerization stage. Therefore additional propylene and comonomer are typically introduced into the second polymerization stage. They are introduced to maintain a desired propylene concentration and to reach a desired ratio of comonomer to propylene in the fluidization gas. Even though the actual comonomer to monomer ratio that is needed to reach the desired content of comonomer in the polymer depends on the catalyst used in the process, the composition of the monomer and comonomer feeds is suitably adjusted so that the fluidization gas has a ratio of comonomer to propylene of about 10 to 100 mol/kmol, preferably from 15 to 70 mol/kmol. Such ratios have been found to yield good results for some catalysts.

It is also often necessary to introduce additional hydrogen into the second polymerization stage to control the melt index of the copolymer mixture. Suitably, the hydrogen feed is controlled to maintain constant hydrogen to propylene ratio in the fluidization gas. The actual ratio depends on the catalyst. Good results have been obtained by maintaining the ratio within the range of from 0.1 to 3 mol/kmol, preferably from 0.2 to 2.5 mol/kmol.

In a fluidized bed gas phase reactor olefins are polymerized in the presence of a polymerization catalyst in an upwards moving gas stream. The reactor typically contains a fluidized bed comprising the growing polymer particles containing the active catalyst, said fluidized bed having its base above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871. One or more of the above-mentioned components may be continuously added into the fluidization gas to compensate for losses caused, among other, by reaction or product withdrawal.

From the inlet chamber the gas flow is passed upwards through a fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087361. Other types of fluidization grids are disclosed, among others, in US-A-4578879, EP 600414 and EP-A-721798. An overview is given in Geldart and Bayens: The Design of Distributors for Gas-fluidized Beds, Powder Technology, Vol. 42, 1985.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the terminal velocity, as otherwise the whole bed would be entrained with the fluidization gas. The minimum fluidization velocity and the terminal velocity can be calculated when the particle characteristics are known by using common engineering practise. An overview is given, among others in Geldart: Gas Fluidization Technology, J.Wiley & Sons, 1986.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The polymeric product may be withdrawn from the gas phase reactor either continuously or intermittently. Combinations of these methods may also be used. Continuous withdrawal is disclosed, among others, in WO-A-00/29452.

Intermittent withdrawal is disclosed, among others, in US-A-4621952, EP-A-188125, EP-A-250169 and EP-A-579426.

The top part of the gas phase reactor may include a so called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain a time-averaged bed level.

Also antistatic agent(s) may be introduced into the gas phase reactor if needed. Suitable antistatic agents and methods to use them are disclosed, among others, in US-A-5026795, US-A-4803251, US-A-4532311, US-A-4855370 and EP-A-560035. They are usually polar compounds and include, among others, water, ketones, aldehydes and alcohols.

The reactor may also include a mechanical agitator to further facilitate mixing within the fluidized bed. An example of suitable agitator design is given in EP-A-707513.

Typically the fluidized bed polymerization reactor is operated at a temperature within the range of from 50 to 100 °C, preferably from 70 to 90 °C. The pressure is suitably from 10 to 40 bar, preferably from 10 to 30 bar.

In the second polymerization stage preferably a copolymer mixture comprising the first propylene random copolymer component (PP1) and a second copolymer component (PP2) is formed.

Said first propylene random copolymer component (PP1) preferably reflects the low molecular weight (LMW) fraction of the bimodal propylene random copolymer (PP) and said second propylene random copolymer component (PP2) preferably reflects the high molecular weight (HMW) fraction of the bimodal propylene random copolymer (PP) as defined above. Thus, the copolymer mixture comprising the first propylene random copolymer component (PP1) and a second propylene random copolymer component (PP2) preferably reflects a mixture of the low molecular weight (LMW) fraction and the high molecular weight (HMW) fraction of the bimodal propylene random copolymer (PP) as defined above. The amount of any prepolymer fraction thereby preferably adds to the amount of the low molecular weight fraction.

The copolymer mixture is formed by introducing the particles of the first propylene random copolymer component (PP1), containing active catalyst dispersed therein, together with additional propylene and comonomer into the second polymerization stage. This causes the second copolymer component (PP2) to form on the particles containing the first propylene random copolymer. The second polymerization stage is preferably conducted in a fluidized bed gas phase reactor. For this reason the terms "second polymerization stage" and "gas phase reactor" may be used interchangeably within the context of the present invention.

The comonomer is selected from ethylene and alpha-olefins containing 4 to 8 carbon atoms. The comonomer used in the second polymerization stage may be the same as or different from the comonomer used in the first polymerization stage with the proviso that ethylene is used as comonomer in at least one polymerization stage. Preferably the same comonomer is used in the first and the second polymerization stage. Preferably, ethylene is used as comonomer in the first and the second polymerization stage.

Also in the second polymerization stage the content of the comonomers is controlled to obtain the desired comonomer content of the copolymer mixture. The obtained reaction mixture is the polymer of bimodal propylene random copolymer (PP).

The comonomer content of first propylene random copolymer component (PP1) is preferably 1.0 to 4.0 wt%, more preferably 1.5 to 3.5 wt%, even more preferably 1.7 to 3.1 wt%, most preferably 1.9 to 3.0 wt%, based on the total weight of the first propylene random copolymer component (PP1).

The comonomer content of the second propylene random copolymer component (PP2) is preferably 4.0 to 9.0 wt.%, more preferably 4.2 to 8.0 wt%, most preferably 4.5 to 7.5 wt% based on the total weight of the second propylene random copolymer component (PP2).

The comonomer content of the first propylene random copolymer component (PP1) is preferably 1.5 to 6.0 mol%, more preferably 2.3 to 5.5 mol%, still more preferably 2.5 to 5.0 mol%, most preferably 3.0 to 4.8 mol%, based on the total content of monomeric units in the first propylene random copolymer component (PP1).

The comonomer content of the second propylene random copolymer component (PP2) is preferably 6.1 to 15.0 mol%, more preferably 6.5 to 12.0 mol%, most preferably 6.8 to 11.0 mol%, based on the total content of monomeric units in the second propylene random copolymer component (PP2).

Preferably, the obtained bimodal propylene random copolymer (PP) has a total comonomer content of 3.0 to 5.0 wt% based on the total weight of the propylene random copolymer (PP), and preferably as further defined above or in the claims.

Furthermore, preferably the comonomer content of the obtained bimodal propylene random copolymer (PP) is higher than the comonomer content of the first propylene random copolymer component (PP1). Preferably, the ratio of the comonomer content of the first propylene random copolymer component (PP1) to the comonomer content of the obtained bimodal propylene random copolymer (PP) (both expressed in wt%), $Co_{PP1}/Co_{PP}$, is 0.35 to 0.70, more preferably 0.40 to 0.65, preferably 0.52 to 0.62.

Furthermore, preferably the comonomer content of the second propylene random copolymer component (PP2) is higher than the comonomer content of the first propylene random copolymer component (PP1). Preferably, the ratio of the comonomer content of the first propylene random copolymer component (PP1) to the comonomer content of the second propylene random copolymer component (PP2) (both expressed in wt%), $Co_{PP1}/Co_{PP2}$, is 0.30 to 0.55, more preferably 0.32 to 0.52, most preferably 0.34 to 0.50

Preferably, the $MFR_2$ of the obtained bimodal propylene random copolymer (PP) is from 0.15 to 0.50 g/10 min, more preferably 0.17 to 0.40 g/10 min, most preferably 0.20 to 0.35 g/10 min.

Furthermore, the MFR of the obtained bimodal propylene random copolymer (PP) is lower than the MFR of the first propylene random copolymer (PP1). Preferably, the ratio of the $MFR_2$ of the obtained bimodal propylene random copolymer (PP) to the $MFR_2$ of the first propylene random copolymer component (PP1), $MFR_{2\ PP}/MFR_{2\ PP1}$, is 0.15 to 0.50, most preferably 0.20 to 0.48.

According to a preferred embodiment of the invention the ratio $Co_{PP1}/Co_{PP}$ is 0.35 to 0.70, more preferably 0.40 to 0.65, most preferably 0.52 to 0.62 and the ratio $MFR_{2(PP)}/MFR_{2(PP1)}$ is 0.15 to 0.50, most preferably 0.20 to 0.48.

The obtained bimodal propylene random copolymer (PP) comprises the first propylene random copolymer component (PP1) including an optional prepolymer component and the second propylene random copolymer component (PP2) in a weight ratio of from 30:70 to 70:30, and preferably as further defined above or in the claims. Respective amounts and preferred amounts of (PP1) and (PP2) are defined above.

As to catalyst, the bimodal propylene random copolymer (PP) can be produced by polymerisation in the presence of any conventional coordination catalyst system including Ziegler-Natta, chromium and single site (like metallocene catalyst), preferably in the presence of a Ziegler-Natta catalyst system. Such Ziegler-Natta catalyst system typically comprises a solid catalyst component, preferably a solid transition metal component, and a cocatalyst, and optionally an external donor. The solid catalyst component comprises most preferably a magnesium halide, a titanium halide and an internal electron donor. Such catalysts are well known in the art.

It is preferred that the nucleating agent (B) is introduced to the bimodal propylene random copolymer (PP) during the polymerisation process of the bimodal propylene random copolymer (PP).

More preferably, a vinyl compound of the formula (BI) as defined above or below, preferably vinyl cyclohexane (VCH), is polymerised in the presence of a catalyst system comprising the solid catalyst component, preferably a solid Ziegler Natta catalyst component, to obtain a modified catalyst system which is the reaction mixture comprising the solid catalyst component and the produced polymer of the vinyl compound of formula (BI). In the obtained modified catalyst system the weight ratio (g) of the polymer of the vinyl compound of the formula (BI), to the solid catalyst component is preferably up to 5 (5:1), preferably up to 3 (3:1) most preferably is from 0.5 (1:2) to 2 (2:1). The obtained modified catalyst system is then used for the polymerisation of the bimodal propylene random copolymer (PP) of the invention as described above.

General preparation of the modified catalyst system of the invention and the polypropylene nucleated with a vinyl compound (I) is disclosed e.g. in EP 1 028 984.

As to the solid Ziegler Natta catalyst component used for the modification, said catalyst component comprises preferably a transition metal component which preferably is a titanium halide and a magnesium halide. These compounds may be supported on a particulate support, such as inorganic oxide, like silica or alumina, or, usually, the magnesium halide to form above said solid support. Examples of such solid catalyst components are disclosed, among others, in WO 87/07620, WO 92/21705, WO 93/11165, WO 93/11166, WO 93/19100, WO 97/36939, WO 98/12234, WO 99/33842.

The solid catalyst components for polymerising the bimodal propylene random copolymer (PP) typically comprise, in addition to the magnesium halide and transition metal compound, an electron donor (internal electron donor).

Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4,347,160, US 4,382,019, US 4,435,550, US 4,465,782, US 4,473,660, US 4,530,912 and US 4,560,671.

Moreover, said solid catalyst components are preferably used in combination with well known external electron donors, including without limiting to, ethers, ketones, amines, alcohols, phenols, phosphines and silanes, for example organosilane compounds containing Si-OCOR, Si-OR, or $Si-NR_2$ bonds, having silicon as the central atom, and R is an alkyl, alkenyl, aryl, arylalkyl or cycloalkyl with 1-20 carbon atoms; and well known cocatalysts, which preferably comprise an aluminium alkyl compound as known in the art, to polymerise the bimodal propylene random copolymer (PP).

When the nucleating agent (B) is introduced to the bimodal propylene random copolymer (PP) during the polymerisation process of the bimodal propylene random copolymer (PP), the amount of nucleating agent (B) present in the bimodal propylene random copolymer (PP) is preferably not more than 500 ppm, more preferably is 0.025 to 200 ppm, still more preferably is 1 to 100 ppm, and most preferably is 5 to 100 ppm, based on the bimodal propylene random copolymer (PP) and the nucleating agent (B), preferably based on the total weight of the polypropylene composition (100 wt%).

The invention thus further relates to a polypropylene composition obtainable by the process as defined above.

When the polymer has been removed from the last polymerisation stage, it is preferably subjected to process steps for removing the residual hydrocarbons from the polymer. Such processes are well known in the art and can include pressure reduction steps, purging steps, stripping steps, extraction steps and so on. Also combinations of different steps are possible. After the removal of residual hydrocarbons the second propylene copolymer composition is preferably mixed with additives as it is well known in the art. Such additives include antioxidants, process stabilizers, neutralisers, lubricating agents, nucleating agents, pigments and so on. The polymer particles are then extruded to pellets as it is known in the art. Preferably co-rotating twin screw extruder is used for the extrusion step. Such extruders are manufactured, for instance, by Coperion (Werner & Pfleiderer) and Japan Steel Works.

Polyethylene (PE)

The inventive polypropylene composition further comprises a polyethylene having a density of equal or below 940 kg/m$^3$.

The PE component is preferably a low density polyethylene (LDPE) or a multimodal linear low density polyethylene (LLDPE), having a density of 910 to 940 kg/m$^3$ and a melt flow rate $MFR_2$ of 0.05 to 2.0 g/10 min, determined according to ISO 1133.

The PE component is preferably a multimodal linear low density polyethylene (LLDPE), having a density of 910 to 940 kg/m$^3$ and a melt flow rate $MFR_2$ of 0.05 to 2.0 g/10 min, determined according to ISO 1133.

Linear low density polyethylenes (LLDPE) are well known in the art and are produced in polymerization processes using a catalyst. The LLDPE may a conventional LLDPE polymer which can be commercially available or be prepared in a polymerization process using a catalyst. The processes, conditions and process control are well described in the literature and a skilled person can choose the conditions depending on the desired LLDPE.

In a preferred embodiment, the multimodal LLDPE is a bimodal linear low density ethylene (LLDPE) copolymer (PE1) having a density of 915 to 940 kg/m$^3$ and a melt flow rate $MFR_2$ of 0.05 to 0.50 g/10 min, determined according to ISO 1133.

Such multimodal LLDPE and their production are, for example, described in WO 2004/000933 A1, p. 9 to 12 to which it is referred.

The bimodal LLDPE (PE1) preferably has a density of 915 to 930 kg/m$^3$, more preferably of 918 to 928 kg/m$^3$, more preferably of 920 to 925 kg/m$^3$.

Preferably, the comonomer of the bimodal LLDPE (PE1) can be alpha-olefins having 4 to 12 carbon atoms, e.g. 1-butene, 4-methyl-I-pentene, 1-hexene, 1-octene, 1-decene. More preferably, the LLDPE is a copolymer of ethylene and 1-butene or 1-hexene, most preferred is 1-butene.

Preferably, the total amount of comonomers present in the bimodal LLDPE (PE1) is of 2.0 to 6.0 mol%, more preferably of 2.5 to 5.5 mol%, and most preferably 3.0 to 5.2 mol%.

Preferably, the bimodal LLDPE (PE1) has a $MFR_2$ of 0.1 to 0.45 g/10min, more preferably of 0.15 to 0.4 g/10min, and most preferably 0.20 to 0.30 g/10min.

In a particularly preferred embodiment, the bimodal LLDPE (PE1) has a $MFR_2$ of 0.20 to 0.30 g/10 min, and/or an $MFR_5$ of 0.80 to 1.2 g/10 min and/or a $MFR_{21}$ of 18 to 26 g/10 min, and/or a density of 920 to 925 kg/m$^3$, and/or a molecular weight distribution (MWD) of 10 to 20, and/or a $M_n$ of 10 to 15 kg/mol, and/or a $M_w$ of 150 to 250 kg/mol, and/or a $MFR_{21}/MFR_2$ ratio ($FRR_{21/2}$) of 80 to 110 and/or a $MFR_{21}/MFR_5$ ratio ($FRR_{21/5}$) of 18 to 26.

Preferred as bimodal LLDPE (PE1), resin Borstar FB2230 as produced by Borealis or Borouge may be used.

In a second preferred embodiment the multimodal LLDPE is a multimodal linear low density polyethylene (LLDPE) terpolymer (PE2) of ethylene with two different comonomers selected from alpha-olefins having from 4 to 10 carbon atoms, having a density of from 910 to 930 kg/m$^3$ and an $MFR_2$ of from 0.5 to 2.5 g/10min.

The multimodal LLDPE terpolymer (PE2) preferably is a multimodal polymer of ethylene with at least two different comonomers selected from alpha-olefins having from 4 to 10 carbon atoms, which has a ratio $MFR_{21}/MFR_2$ of from 13 to 30 and an MWD of 5 or less.

Such multimodal LLDPE terpolymers are disclosed, for example, in WO 2016/083208. As far as definitions (such as for the "modality" of a polymer) and production methods for these ethylene terpolymers are concerned it is referred to WO 2016/083208. Furthermore, all embodiments and preferred embodiments of such LLDPE terpolymers as described in WO 2016/083208 which have a density in the range a density of from 910 to 925 kg/m$^3$ are also preferred embodiments of the multimodal LLDPE terpolymer (PE2) in the present application, whether or not explicitly described herein.

The multimodal LLDPE terpolymer (PE2) preferably has an $MFR_2$ in the range of from 0.6 to 2.0 g/10min, preferably 0.7 to 1.8 g/10 min, and particularly preferred from 0.8 to 1.8 g/10min.

Preferably, the multimodal LLDPE terpolymer (PE2) has a density of from 910 to 925 kg/m$^3$, more preferably of from 913 to 922 kg/m$^3$, and particularly preferred of from 915 to 920 kg/m$^3$.

The multimodal LLDPE terpolymer (PE2) preferably has a ratio $MFR_{21}/MFR_2$ of from 13 to 30, more preferably of from 15 to 25.

The at least two alpha-olefin comonomers having from 4 to 10 carbon atoms of the multimodal LLDPE terpolymer (PE2) are preferably 1-butene and 1-hexene.

Preferably, the total amount of comonomers present in the multimodal LLDPE terpolymer (PE2) is from 0.5 to 10 mol%, preferably from 1.0 to 8 mol%, more preferably from 1.0 to 5 mol%, still more preferably from 1.5 to 5.0 mol% and most preferably from 2.5 to 4.0 mol%.

The multimodal ethylene terpolymer (PE2), which preferably is a bimodal terpolymer, preferably comprises, or consists of, an ethylene polymer component (A) and an ethylene polymer component (B), wherein the ethylene polymer component (A) has higher $MFR_2$ than the ethylene polymer component (B).

More preferably, the ethylene polymer component (A) has an $MFR_2$ of from 1 to 50 g/10min, preferably of from 1 to 40 g/10min, more preferably of from 1 to 30 g/10min, even more preferably of from 2 to 20 g/10min, still more preferably of from 2 to 15 g/10min and most preferably of from 2 to 10 g/10min.

The ratio of the $MFR_2$ of ethylene polymer component (A) to the $MFR_2$ of the ethylene polymer component (B) is from 2 to 50, preferably from 5 to 40, more preferably from 10 to 30, still more preferably from 10 to 25 and most preferably from 11 to 25.

Preferably, the ethylene polymer component (A) comprises a different comonomer than the ethylene polymer (B).

Preferably, the ethylene polymer component (A) has lower amount (mol%) of comonomer than ethylene polymer component (B), more preferably, the ratio of [the amount (mol%) of alpha-olefin comonomer having from 4 to 10 carbon atoms comonomer present in ethylene polymer component (A)] to [the amount (mol%) of at least two alpha-olefin comonomers having from 4 to 10 carbon atoms of the final multimodal ethylene terpolymer] is of from 0.10 to 0.60, preferably of from 0.15 to 0.50.

Preferably, the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

Preferably, the ethylene polymer component (A) has different, preferably higher, density than the density of the ethylene polymer component (B).

The density of the ethylene polymer component (A) is preferably from 925 to 950 kg/m$^3$, more preferably from 930 to 945 kg/m$^3$.

Preferably, the multimodal LLDPE terpolymer (PE2) comprises the ethylene polymer component (A) in an amount of from 30 to 70 wt.%, preferably from 40 to 60 wt.%, more preferably from 35 to 50 wt.%, still more preferably from 40 to 50 wt.%; and the ethylene polymer component (B) in an amount of from 70 to 30 wt.%, preferably from 60 to 40 wt.%, more preferably from 50 to 65 wt.%, still more preferably from 50 to 60 wt.%, based on the total amount (100 wt.%) of the multimodal ethylene terpolymer (PE2).

Most preferably, the multimodal LLDPE terpolymer (PE2) consists of the ethylene polymer components (A) and (B) as the sole polymer components. Accordingly, the split between ethylene polymer component (A) to ethylene polymer component (B) is (30 to 70):(70 to 30), preferably (40 to 60):(60 to 40), more preferably (35 to 50):(65 to 50) and most preferably (40 to 50):(50 to 60).

In a particularly preferred embodiment, the multimodal LLDPE terpolymer (PE2) is a bimodal terpolymer, i.e. comprises a low molecular weight and a high molecular weight component, and has an $MFR_2$ of from 0.8 to 1.8 g/10min, and/or an $MFR_5$ of from 3.0 to 5.0 g/10min and/or an $MFR_{21}$ of from 20 to 40 g/10min, and/or a density of from 915 to 920 kg/m$^3$, and/or a molecular weight distribution (MWD) of from 3.0 to 5.0, and/or an $M_n$ of from 15 to 25 kg/mol, and/or an $M_w$ of from 80 to 115 kg/mol, and/or an $MFR_{21}/MFR_2$ ratio ($FRR_{21/2}$) of from 15 to 25 and/or an $MFR_{21}/MFR_5$ ratio ($FRR_{21/5}$) of from 6 to 9.

Preferred as multimodal LLDPE terpolymers (PE2) are also such commercially available as Anteo™ from Borealis or Borouge having the properties as required herein, especially Anteo™ FK1828 or Anteo™ FK1820. An especially preferred multimodal LLDPE terpolymer (PE2) is Anteo™ FK1820.

Article of the invention

Further, the invention relates to an article comprising the polypropylene composition according to the invention as defined above.

Preferably, the article comprises the polypropylene composition in an amount of more than 80 wt.%, more preferably at least 90 wt.-%, even more preferably at least 95 wt.-%, still more preferably 98 wt.-%, like 99 wt.-% of the polypropylene composition. It is especially preferred that the article consists of the polypropylene composition.

Preferably, said article is a moulded article, preferably an injection moulded (IM) or a blown moulded article, preferably an extrusion blow moulded article, more preferably an injection moulded article, preferably for pipe applications including fittings for a pipe, an article required for pipe connections such as couplers, or pipes.

Such fittings for a pipe, articles required for pipe connections, or pipes produced from the polypropylene composition according to the invention preferably have the advantageous properties as described above and shown below in the experimental part. Thus, the pipe according to the invention preferably qualifies as pressure pipe, more preferably as a hot and cold water pressure pipe.

Pipe of the invention can be

- a monolayer pipe, wherein the pipe layer comprises, preferably consists of, the multimodal polypropylene composition of the invention, or

- a multilayer pipe, wherein at least one layer comprises, preferably consists of, the multimodal polypropylene composition of the invention.

The preferred pipe of the invention has at least one layer comprising, preferably consisting of, the multimodal polypropylene composition of the invention More preferably, the pipe is for pressure pipe applications, preferably a pressure pipe for hot and cold water pipe applications.

A pipe further preferably has a pressure resistance of at least 100 h, more preferably 500 h, most preferably of at least 1100 h, determined according to ISO 1167-1:2006 at a hoop stress of 4.5 MPa and 95 °C. The upper limit is usually not higher than 10000 h.

A pipe further preferably has a pressure resistance of at least 50 h, more preferably of at least 100 h, most preferably of at least 400 h, determined according to ISO 1167-1:2006 at a hoop stress of 14 MPa and 20 °C. The upper limit is usually not higher than 10000 h.

A pipe further preferably has a pressure resistance of at least 1 h, more preferably of at least 2 h, most preferably of at least 5 h, determined according to ISO 1167-1:2006 at a hoop stress of 16 MPa and 20 °C. The upper limit is usually not higher than 2000 h.

Fitting of the invention preferably consists of the multimodal polypropylene composition of the invention.

The invention further relates to the use of a polypropylene composition according to the invention for the production of an article as defined above.

*Production of pipe of the invention:*

Pipes can be produced from the bimodal polypropylene composition according to the present invention according to the methods known in the art. Thus, according to one preferred method the polypropylene composition is extruded through an annular die to a desired internal diameter, after which the polypropylene composition is cooled.

The pipe extruder preferably operates at a relatively low temperature and therefore excessive heat build-up should be avoided. Extruders having a high length to diameter ratio L/D more than 15, preferably of at least 20 and in particular of at least 25 are preferred. The modern extruders typically have an L/D ratio of from about 30 to 35.

The polymer melt is extruded through an annular die, which may be arranged either as end-fed or side-fed configuration. The side-fed dies are often mounted with their axis parallel to that of the extruder, requiring a right-angle turn in the connection to the extruder. The advantage of side-fed dies is that the mandrel can be extended through the die and this allows, for instance, easy access for cooling water piping to the mandrel.

After the plastic melt leaves the die it is calibrated to the correct diameter. In one method the extrudate is directed into a metal tube (calibration sleeve). The inside of the extrudate is pressurised so that the plastic is pressed against the wall of the tube.

According to another method the extrudate leaving the die is directed into a tube having a perforated section in the centre. A slight vacuum is drawn through the perforation to hold the pipe against the walls of the sizing chamber.

After the sizing the pipe is cooled, typically in a water bath having a length of about 5 metres or more.

*Production of Fittings of the invention:*

Fittings of the invention can be produced from the bimodal polypropylene composition according to the invention using the methods and equipment known in the art. Thus, according to one preferred method the polypropylene composition is moulded, preferably injection moulded or blown moulded, more preferably injection moulded, in a conventional manner using conventional moulding equipment, to a shape of a fitting for a pipe.

The invention is further illustrated by the following figures and examples

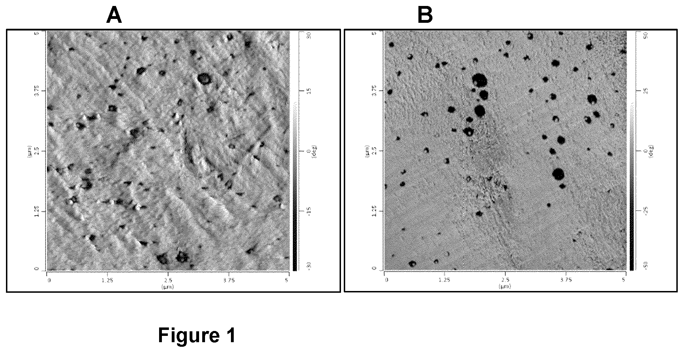

Figure 1: AFM phase images for 5 $\mu$m x 5 $\mu$m area (A) IE3 and (B) CE1

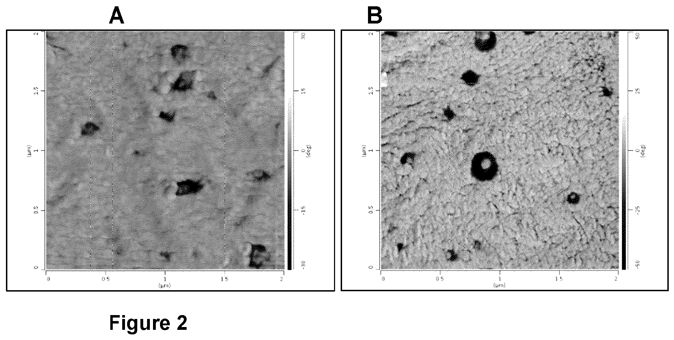

Figure 2: AFM phase images for 2 $\mu$m x 2 $\mu$m area (A) IE3 and (B) CE1

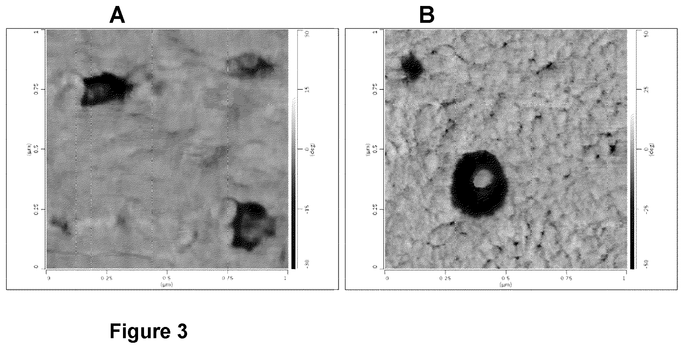

Figure 3: AFM phase images for 1 $\mu$m x 1 $\mu$m area (A) IE3 and (B) CE1

Examples

Determination Methods

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is measured at a temperature 230 °C and a load of 2.16 kg.

The melt index $MFR_2$ is herein assumed to follow the following mixing rule (equation 1):

$$MI_b = \left( w_1 \cdot MI_1^{-0.0965} + w_2 \cdot MI_2^{-0.0965} \right)^{-\frac{1}{0.0965}} \quad (eq.\ 1)$$

Where w is the weight fraction of the component in the mixture, MI is the melt index $MFR_2$ and subscripts b, 1 and 2 refer to the mixture (PP), component 1 (PP1) and component 2 (PP2), respectively.

b) Density

Density of the polymer was measured according to ISO 1183-1:2004 Method A on compression moulded specimen prepared according to EN ISO 1872-2 or ISO 19069-2 and is given in $kg/m^3$.

c) Comonomer content

The comonomer content was determined by quantitative Fourier transform infrared spectroscopy (FTIR) after basic assignment calibrated via quantitative $^{13}$C nuclear magnetic resonance (NMR) spectroscopy in a manner well known in the art. Thin films are pressed to a thickness of between 100-500 micrometer and spectra recorded in transmission mode.

Specifically, the ethylene content of a polypropylene-co-ethylene copolymer is determined using the baseline corrected peak area of the quantitative bands found at 720-722 and 730-733 $cm^{-1}$. Specifically, the butene or hexene content of a polypropylene copolymer is determined using the baseline corrected peak area of the quantitative bands found at 1377-1379 $cm^{-1}$. Quantitative results are obtained based upon reference to the film thickness.

The comonomer content is herein assumed to follow the mixing rule (equation 2):

$$C_b = w_1 \cdot C_1 + w_2 \cdot C_2 \quad (eq.\ 2)$$

Where C is the content of comonomer in weight-%, w is the weight fraction of the component in the mixture and subscripts b, 1 and 2 refer to the overall mixture (PP), component 1 (PP1) and component 2 (PP2), respectively.

As it is well known to the person skilled in the art the comonomer content in weight basis in a binary copolymer can be converted to the comonomer content in mole basis by using the following equation

$$c_m = \frac{1}{1 + \left( \frac{1}{c_w} - 1 \right) \cdot \frac{MW_c}{MW_m}} \quad (eq.\ 3)$$

where $c_m$ is the mole fraction of comonomer units in the copolymer, $c_w$ is the weight fraction of comonomer units in the copolymer, $MW_c$ is the molecular weight of the comonomer (such as ethylene) and $MW_m$ is the molecular weight of the main monomer (i.e., propylene).

d) Xylene Cold Solubles

Xylene cold solubles (XCS, wt.-%) content was determined at 25 °C according ISO 16152; first edition; 2005-07-01.

The content of xylene soluble polymer is herein assumed to follow the mixing rule (equation 4):

$$XS_b = w_1 \cdot XS_1 + w_2 \cdot XS_2 \quad (eq.\ 4)$$

Where XS is the content of xylene soluble polymer in weight-%, w is the weight fraction of the component in the mixture and subscripts b, 1 and 2 refer to the overall mixture (PP), component 1 (PP1) and component 2 (PP2), respectively.

e) Flexural Modulus

The flexural modulus was determined according to ISO 178. The test specimens having a dimension of 80 x 10 x 4.0 mm$^3$ (length x width x thickness) were prepared by injection molding according to EN ISO 1873-2 or ISO 19069-2. The length of the span between the supports was 64 mm, the test speed was 2 mm/min.

f) Tensile Modulus

Tensile Modulus was determined according to ISO 527-2 on test specimen of type 1A molded specimen having a thickness of 4 mm at 1 mm/min and 23°C, the Injection moulding carried out according to ISO 1873-2:2007 or ISO 19069-2.

g) Charpy Notched Impact Strength

Charpy notched impact strength (Charpy NIS) was determined according to ISO 179/eA:2000 on notched injection moulded type 1A specimens. Testing temperature is 23±2°C for Charpy NIS at 23°C and 0±2°C for Charpy NIS at 0°C. Injection moulding carried out according to ISO 1873-2:2007 or ISO 19069-2 and samples were conditioned for 24 hrs after injection molding.

h) Crystallization Temperature, Melting Temperature

The crystallization temperature $T_c$ and the melting temperature $T_m$ were measured with a Mettler TA820 differential scanning calorimetry device (DSC) on 10 ± 3 mg samples according to ISO 11357-3:1999. Crystallization temperature was obtained during 10 °C/min cooling and heating scans between 30 °C and 225 °C.
The crystallization temperatures were taken as the peaks of the exotherms of said peaks.
The melting temperatures were taken as the peaks of endotherms.

i) Rheological parameters

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at T 200°C applying a frequency range between 0.01 and 600 rad/s and setting a gap of 1.3 mm.
In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively

$\omega$ is the angular frequency

$\delta$ is the phase shift (loss angle between applied strain and stress response)

t is the time

Dynamic test results are typically expressed by means of several different rheological functions, namely the shear storage modulus G', the shear loss modulus, G", the complex shear modulus, G*, the complex shear viscosity, $\eta$*, the dynamic shear viscosity, $\eta$', the out-of-phase component of the complex shear viscosity $\eta$" and the loss tangent, tan $\delta$ which can be expressed as follows:

$$G' = \frac{\sigma_0}{\gamma_0}\cos\delta \text{ [Pa]} \qquad (3)$$

$$G' = \frac{\sigma_0}{\gamma_0}\sin\delta \text{ [Pa]} \qquad (4)$$

$$G^* = G' + iG'' \text{ [Pa]} \qquad (5)$$

$$\eta^* = \eta' - i\eta'' \text{ [Pa.s]} \qquad (6)$$

$$\eta' = \frac{G''}{\omega} \text{ [Pa.s]} \qquad (7)$$

$$\eta'' = \frac{G'}{\omega} \text{ [Pa.s]} \qquad (8)$$

The determination of so-called Shear Thinning Index, which correlates with MWD and is independent of Mw, is done as described in equation 9.

$$\text{SHI}_{(x/y)} = \frac{\text{Eta* for (G* = x kPa)}}{\text{Eta* for (G* = y kPa)}} \qquad (9)$$

For example, the $\text{SHI}_{(0.1/100)}$ is defined by the value of the complex viscosity, in Pa s, determined for a value of G* equal to 0.1 kPa, divided by the value of the complex viscosity, in Pa s, determined for a value of G* equal to 100 kPa.

The values of storage modulus (G'), loss modulus (G"), complex modulus (G*) and complex viscosity ($\eta$*) were obtained as a function of frequency ($\omega$).

Thereby, e.g. $\eta^*_{300}$ (eta*$_{300}$) is used as abbreviation for the complex viscosity at the frequency of 300 rad/s and $\eta^*_{0.05}$ (eta*$_{0.05}$) is used as abbreviation for the complex viscosity at the frequency of 0.05 rad/s.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "Interpolate y-values to x-values from parameter" and the "logarithmic interpolation type" were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

j) Molecular weight distribution MWD, Mw, Mn

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 15 2,6-Di tert butyl-4-methyl-phenol) as solvent at 145 °C and at a constant flow rate of 1 ml/min. 216.5 $\mu$l of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. 20 All samples were prepared by dissolving 5 - 10 mg of polymer in 10 ml (at 160 °C) of stabilized TCB (same as mobile phase) and keeping for 3 hours with continuous shaking prior sampling in into the GPC instrument. In case of PP the constants are: K: 19 x$10^{-3}$ ml/g and a: 0.725 for PP.

k) Hydrostatic pressure test (HPT)

The resistance to internal pressure has been determined in a pressure test on pressure test on un-notched 32 mm x 3mm SDR 11 pipes having a length of 450 mm is carried out in water-inside and water-outside environment according to ISO 1167-1:2006. End caps of type A were used. The time to failure is determined in hours. A hoop stress of 4.5 MPa at a temperature of 95°C, a hoop stress of 14 MPa at a temperature of 20°C or a hoop stress of 16 MPa at a temperature of 20°C was applied.

l) Morphology

To understand the detailed morphology of inventive compositions and comparative compositions, Atomic Force Microscopy (AFM) imaging coupled with NanoIR analysis was carried out on selected samples. A Bruker Anasys NanoIR2™ equipment (Anasys Instruments Inc) was used, which enables high resolution AFM imaging together with the nano-IR analysis.
Imaging was done in tapping mode, also known as dynamic contact mode or intermittent contact mode. In tapping mode, the probe is mechanically oscillated by creating an AC Deflection signal, at or near its resonant frequency. The amplitude of the probe is used to generate the height value (z) of the sample at each x and y position. The cantilever's oscillation is driven by a small piezo under the probe mount that is vibrated at the resonant frequency of the cantilever. AFM probes that have a fundamental resonance frequency of at least 50 kHz were used.
The nanoIR2 Specifications were as follows:

XY Stage Range: ~7 x 9 mm
Z Stage Range: >10 mm
Optical field of view: ~900 x 600 microns low zoom, ~300 x 200 microns high zoom
Spatial Resolution (optics): ~1.5 $\mu$m
XY Scan Range: 80 x 80 microns, closed loop control
Z Scan Range: >7 microns

The sampling is carried out so that the test specimen represents the original test material. The test specimen used in this study were pellets. A flat surface required for AFM analysis was prepared from the pellet sample using a Leica UC7 ultra-microtome with FC7 cryo-attachment, and the sample preparation temperature used was -80°C.
The mean particle size of the dispersed phase particles is determined from the images using the Carl Zeiss Axiovision SE64 version 4.9 software.
The mean inter-particle distance is determined from the images using the Carl Zeiss Axiovision SE64 version 4.9 software.

**Examples**

**1. Bimodal propylene copolymer (PP) component**

a) Preparation of the catalyst

First, 0.1 mol of $MgCl_2$ x 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of diethylhexylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried.

Catalyst and its preparation concept is described in general e.g. in patent publications EP 491 566, EP 591 224 and EP 586 390.

b) Preparation of the bimodal propylene copolymer (PP) component of Examples IE1 to IE4 and comparative Examples CE1 to CE3

For the preparation of the bimodal propylene copolymer (PP) component of Examples IE1 to E4, triethylaluminium (TEAL), dicyclopentyldimethoxysilane (DCPDMS) as donor (Do), catalyst as produced above and vinyl cyclohexane (VCH) were added into oil, like mineral oil, e.g. Technol 68 (kinematic viscosity at 40 °C 62-74 cSt), in amounts so that Al/Ti was 3-4 mol/mol, Al/Do was as well 3-4 mol/mol, and weight ratio of VCH/solid catalyst was 1:1. The mixture was heated to 60 - 65 °C and allowed to react until the content of the unreacted vinylcyclohexane in the reaction mixture was less than 1000 ppm. Catalyst concentration in the final oil-catalyst slurry was 10 - 20 wt-%.

For the preparation of the bimodal propylene copolymer (PP) component of Comparative Example CE1 to CE3 the preparation of the oil-catalyst slurry was conducted as described above for the propylene random copolymer component of Examples IE1 to IE4 with the exception that no vinylcyclohexane (VCH) was added into oil and no polymerisation step of VCH at 60 - 65 °C was performed.

For the polymerization of the bimodal propylene copolymer (PP) component of Examples IE1 to IE4 and Comparative Example CE1 to CE3 the catalyst was fed together with propylene to a prepolymerization reactor. Triethylaluminium was used as a cocatalyst and dicyclopentyldimethoxysilane as a donor. The polymerization conditions and feeds are listed in Table 1.

The slurry from the prepolymerization stage was directly fed to a loop reactor. Propylene, hydrogen and ethylene were further added to the loop reactor. The polymerization conditions and feeds are listed in Table 1.

The slurry from loop reactor was introduced to a gas phase reactor via direct feed line, i.e. without monomer flashing in-between the reactors. Propylene, ethylene and hydrogen were fed to the gas phase reactor. The polymerization conditions and feeds are listed in Table 1.

The final Poly-VCH content in the obtained final polymers of Examples IE1 to IE4 was 200 ppm or less.

In the bimodal propylene copolymer (PP) component of Examples IE1 to IE4 as well as in the Comparative Example CE1 to CE3 the low molecular weight fraction of the propylene random copolymer is polymerized in the loop reactor whereas the high molecular weight fraction of the propylene random copolymer is polymerized in the subsequent gas phase reactor in the presence of the low molecular weight fraction. The polymerization conditions of the bimodal propylene random copolymer (PP) component of IE1 to IE4 and Comparative Example CE1 to CE3 are shown in Table 1 and Table 2.

c) Compounding

The bimodal propylene copolymer (PP polymer) of Inventive Examples IE1 to IE4 and Comparative Examples CE1 to CE3 emerging from the gas phase reactor (identified as reactor PP-powder) were compounded together with conventional antioxidants and Ca-stearate and/or polyethylene component (PE), were pelletized in a W&P ZSK 70 twin-screw extruder (Coperion) at a melt temperature of 250°C and an extruder throughput of 200 kg/h. The final content of antioxidant and Ca-stearate in the obtained final polymers of Examples IE1 to IE4 and CE1 to CE3 was 0.8000 wt%. The properties of the compounded polypropylene compositions of inventive examples IE1 to IE4 and Comparative Example CE1 to CE3 are shown in Tables 3 and 4.

Table 1 Polymerization data

| PP Polymer | | PP for CE1 | PP for CE2 and CE3 |
| --- | --- | --- | --- |
| **Prepolymerization** | | | |
| Catalyst Type | | no pVCH modification | no pVCH modification |
| Temperature | °C | 30 | 30 |
| Pressure | bar | 53 | 53 |
| Donor feed | [g/t(C3)] | 15 | 15 |
| TEAL feed | [g/t(C3)] | 150 | 150 |
| **Loop Reactor** | | | |
| Temperature | °C | 70 | 70 |
| Pressure | bar | 54 | 54 |

(continued)

| Loop Reactor | | | |
|---|---|---|---|
| H2/C3 feed | mol/kmol | 0.78 | 0.65 |
| $MFR_2$ | g/10min | 0.85 | 0.75 |
| XCS | wt% | 3.0 | 5.0 |
| C2 content ($C2_{PP1}$) | wt% | 2.30 | 2.90 |
| Split | wt% | 45 | 40 |
| **Gas Phase Reactor (GPR)** | | | |
| Temperature | °C | 75 | 80 |
| Pressure | barg | 22 | 16 |
| H2/C3 feed | mol/kmol | 2.0 | 2.0 |
| C2/C3 | mol/kmol | 32 | 30 |
| C2 content in GPR-fraction calculated* ($C2_{PP2}$) | wt% | 6.5 | 5.1 |
| Final $MFR_2$ | g/10min | 0.30 | 0.30 |
| Final XCS | wt% | 8.2 | 6.8 |
| Final C2 content ($C2_{PP}$) | wt% | 4.6 | 4.2 |
| Split | wt% | 55 | 60 |
| **PP polymer** | | | |
| $MFR_2$ | g/10min | 0.30 | 0.30 |
| C2 content ($C2_{PP}$)** | wt% | 4.6 | 4.2 |
| XCS | wt% | 8.2 | 6.8 |
| $C2_{PP1}/C2_{PP}$*** | | 0.50 | 0.70 |
| $C2_{PP1}/C2_{PP2}$**** | | 0.35 | 0.58 |
| $MFR_{2(PP)}/MFR_{2(PP1)}$ | | 0.35 | 0.40 |

C2 content refers to the ethylene comonomer content; C3 refers to the propylene monomer feed.
\* calculated for the polymer polymerised in the GPR reactor (high molecular weight HMW fraction)
\*\* measured from final polypropylene polymer
\*\*\* C2 content Loop Reactor (PP1) in wt% / Final C2 content in gas phase reactor in wt% ($C2_{PP1}/C2_{PP}$)
\*\*\*\* C2 content Loop Reactor (PP1) in wt% / C2 content calculated in gas phase reactor component (PP2) in wt% ($C2_{PP1}/C2_{PP2}$)

Table 2 Polymerization data

| PP Polymer | | PP for IE1 | PP for IE2 | PP for IE3 | PP for IE4 |
|---|---|---|---|---|---|
| **Prepolymerization** | | | | | |
| Catalyst Type | | pVCH modified catalyst | pVCH modified catalyst | pVCH modified catalyst | pVCH modified catalyst |
| Temperature | °C | 30 | 30 | 30 | 30 |
| Pressure | bar | 53 | 53 | 53 | 53 |
| Donor feed | [g/t(C3)] | 15 | 15 | 15 | 15 |
| TEAL feed | [g/t(C3)] | 150 | 150 | 150 | 150 |
| **Loop Reactor** | | | | | |
| Temperature | °C | 70 | 70 | 70 | 70 |
| Pressure | bar | 53 | 53 | 53 | 53 |

(continued)

| Loop Reactor | | | | | |
|---|---|---|---|---|---|
| H2/C3 feed | mol/kmol | 0.66 | 0.66 | 0.66 | 0.66 |
| $MFR_2$ | g/10min | 0.80 | 0.80 | 0.80 | 0.80 |
| XCS | wt% | 3.5 | 3.4 | 3.9 | 3.9 |
| C2 content ($C2_{PP1}$) | wt% | 2.2 | 2.2 | 2.5 | 2.6 |
| Split | wt% | 45 | 45 | 45 | 45 |
| **Gas Phase Reactor** | | | | | |
| Temperature | °C | 75 | 75 | 75 | 75 |
| Pressure | barg | 24 | 24 | 21 | 19 |
| $H_2/C_3$ feed | mol/kmol | 2.0 | 1.9 | 2.0 | 2.0 |
| $C_2/C_3$ | mol/kmol | 37 | 37 | 37.5 | 37.5 |
| $C_2$ content in GPR-fraction calculated* ($C2_{PP2}$) | wt% | 5.5 | 5.5 | 5.6 | 5.9 |
| Final $MFR_2$ | g/10min | 0.27 | 0.22 | 0.28 | 0.29 |
| Final XCS | wt% | 6.7 | 6.8 | 7.0 | 7.1 |
| Final $C_2$ content ($C2_{pp}$) | wt% | 3.9 | 4.0 | 4.2 | 4.4 |
| Split | wt% | 57 | 56 | 56 | 56 |
| **PP polymer** | | | | | |
| $MFR_2$ | g/10min | 0.27 | 0.22 | 0.28 | 0.29 |
| $C_2$ content PP ($C2_{PP}$)** | wt% | 3.9 | 4.0 | 4.2 | 4.4 |
| XCS | wt% | 6.7 | 6.8 | 7.0 | 7.1 |
| $C2_{PP1}/C2_{PP}$*** | | 0.56 | 0.55 | 0.60 | 0.59 |
| $C2_{PP1}/C2_{PP2}$**** | | 0.43 | 0.41 | 0.45 | 0.45 |
| $MFR_{2(PP)}/MFR_{2(PP1)}$ | | 0.34 | 0.28 | 0.35 | 0.36 |

$C_2$ content refers to the ethylene comonomer content; C3 refers to the propylene monomer feed.
* calculated for the polymer polymerised in the GPR reactor (high molecular weight HMW fraction)
** measured from final polypropylene polymer
*** $C_2$ content Loop Reactor (PP1) in wt% / Final $C_2$ content in gas phase reactor in wt% ($C2_{PP1}/C2_{PP}$)
**** $C_2$ content Loop Reactor (PP1) in wt% / $C_2$ content calculated in gas phase reactor component (PP2) in wt% ($C2_{PP1}/C2_{PP2}$)

### 2. Polyethylene component

Inventive Examples IE1 to IE4:

LLDPE in Inventive Examples 2 and 3 is the commercial linear low density polyethylene FB2230 by Borealis or Borouge having a density of 923 kg/m³, a melt flow rate $MFR_2$ (190 °C) of 0.25 g/10 min, $MFR_5$ (190 °C) of 0.95 g/10 min and a melting temperature in the range of 120 to 125 °C.
LLDPE in Inventive Examples 1 and 4 is the commercial linear low density polyethylene Anteo™ FK1820 by Borealis or Borouge having a density of 918 kg/m³ , a melt flow rate $MFR_2$ (190 °C) of 1.5 g/10 min and a melting temperature in the range of 118 to 124 °C.

Comparative Examples 2 to 3:

LDPE in Comparative Examples 2 to 3 is the commercial low density polyethylene FT5230 by Borealis having a density of 923 kg/m³, a melt flow rate $MFR_2$ (190 °C) of 0.75 g/10 min and a melting temperature of 112 °C.

## 3. Preparation of the polypropylene composition

For preparing Inventive Compositions IE1 to IE4, the bimodal propylene copolymers (PP for IE1 to IE4) as indicated in Table 2 were melt blended with the linear low density polyethylene (LLDPE) in amounts as indicated in Tables 3.

For preparing Comparative Compositions CE2 and CE3, the bimodal propylene copolymers (PP for CE2 and CE3) as indicated in Table 1 were melt blended with the low density polyethylene (LDPE) in amounts as indicated in Tables 3.

For Comparative Composition CE1 the bimodal propylene copolymers (PP for CE1) as indicated in Table 1 was used without any blending of polyethylene.

The polymer pellets of Inventive Compositions IE1 to IE4 as well as in the Comparative Compositions CE1 to CE3 were prepared to test specimens for the tests as listed or were extruded to pipes in order to test the pressure resistance and processability of the compositions. The test pipes from the polymers of Inventive Compositions IE1 to IE4 as well as from the Comparative Compositions CE1 to CE3 were extruded by using a Krauss Maffei pipe extruder. Output of the extruder was 50 to 60 kg/h, melt pressure was 100 to 120 barg and the melt temperature was 220 to 230 °C. The test pipes had a diameter of 32.3 mm and wall thickness of 3 mm. The shrinkage of the produced test pipes was clearly less than 5 %.

The properties of the Comparative Compositions CE1 to CE3 and Inventive Compositions IE1 to IE4 are summarized in Tables 3 and 4.

Table 3: Composition and physical properties for the inventive and comparative examples

| composition | IE1 | IE2 | IE3 | IE4 | CE1 | CE2 | CE3 |
|---|---|---|---|---|---|---|---|
| PP polymer (wt.%) | 97 | 97 | 98 | 98 | 100 | 98 | 95 |
| FB2230 LLDPE (wt.%) | 0 | 3 | 2 | 0 | 0 | 0 | 0 |
| FK1820 LLDPE (wt.%) | 3 | 0 | 0 | 2 | 0 | 0 | 0 |
| FT5230 LDPE (wt.%) | - | - | - | - | - | 2 | 5 |
| $MFR_2$ (g/10min) | 0.27 | 0.23 | 0.28 | 0.30 | 0.30 | 0.30 | 0.32 |
| $C_2$ total (wt.%)* | 6.7 | 6.9 | 6.3 | 6.6 | 4.6 | 6.2 | 9.0 |
| XCS (wt.%) | 7.1 | 7.4 | 9.2 | 8.7 | 8.2 | 7.0 | 6.6 |
| $T_m$ (°C) | 146.7 | 146.6 | 145.3 | 145.2 | 141.4 | 142.1 | 142.1 |
| $T_c$ (°C) | 119.3 | 119.2 | 118.1 | 117.9 | 104.7 | 103.1 | 103.0 |
| Mn | 41 | 44 | 41 | 39 | 47 | 47 | 46 |
| Mw | 603 | 661 | 620 | 625 | 656 | 477 | 472 |
| MWD (Mw/Mn) | 14.6 | 15.0 | 15.1 | 16.2 | 14.0 | 10.1 | 10.2 |
| Eta (0.05 rad/s) (Pa.s) | 80778 | 86532 | 80046 | 75122 | 66109 | 68800 | 67900 |
| Eta (300 rad/s) (Pa.s) | 690 | 693 | 692 | 691 | 666 | 667 | 651 |
| SHI (2.7/210) | 138.4 | 149.0 | 133.8 | 124.8 | 124.7 | 131.3 | 146.0 |

\* $C_2$ total refers to the ethylene content measured from final polypropylene polymer composition after the compounding step (c) as described above

Table 4: Mechanical properties and pipe pressure testing data for the Inventive and Comparative examples

| composition | IE1 | IE2 | IE3 | IE4 | CE1 | CE2 | CE3 |
|---|---|---|---|---|---|---|---|
| Tensile modulus (MPa) | 857 | 871 | 880 | 868 | 851 | 810 | 780 |
| Tensile stress at yield (MPa) | 26.3 | 26.7 | 26.5 | 25.9 | 25.9 | 25.0 | 24.3 |
| Tensile strain at yield (%) | 13.2 | 13.0 | 13.1 | 13.0 | 12.5 | 12.8 | 13.1 |
| Tensile stress at break (MPa) | 27.9 | 28.5 | 28.4 | 28.6 | 28.2 | 28.7 | 27.9 |
| Nominal strain at break (%) | 433 | 443 | 440 | 452 | 454 | 460 | 450 |
| Flexural modulus (MPa) | 972 | 984 | 910 | 915 | 889 | 900 | 880 |

(continued)

| composition | IE1 | IE2 | IE3 | IE4 | CE1 | CE2 | CE3 |
|---|---|---|---|---|---|---|---|
| Charpy notched impact 0°C (kJ/m$^2$) | **7.3** | **7.4** | **7.0** | **7.3** | **6.4** | **2.48** | **3.05** |
| Charpy notched impact 23°C (kJ/m$^2$) | **69.2** | **70.5** | **67.0** | **71.3** | **36.1** | **38.3** | **42.6** |
| HPT 16MPa, 20°C (hrs) | 22 | 25 | 21 | 12 | 13 | n.a. | n.a. |
| HPT 14MPa, 20°C (hrs) | 1308 | 1404 | 817 | 450 | 440 | n.a. | n.a. |
| HPT 4.5MPa, 95°C (hrs) | 1220 | 1150 | >1800 | > 1800 | 1036 | 551 | 1071 |
| *n.a. Not available* | | | | | | | |

It can be seen from the results of Tables 3 and 4 that compositions IE1 to IE4 according to the invention show an improved balance of properties in terms of charpy notched impact strength at room temperature (23°C) and charpy notched impact at cold temperature (0°C), flexural modulus, tensile modulus and eta*$_{300}$. All inventive examples show superior charpy impact strength at room temperature (23°C) and cold temperature (0°C) while flexural modulus and tensile modulus at least remain at a high level, and provides superior pipe performance in Hydrostatic Pressure Test (HPT).

The invention is based on the surprising finding that such advantageous balance between stiffness and impact may in particular be achieved by carefully selecting the PE in a small amount, and also by designing the bimodal propylene copolymer (PP) suitable for incorporating these PE's together. This can be seen by the morphology analysis as described below.

Morphology Analysis of Inventive and Comparative Compositions

From the AFM phase images, the inventive compositions and comparative compositions show two-phase morphology composed of a continuous matrix phase, within which, softer sub-micron domains are seen as a dispersed phase. All samples show uniform / homogenous distribution of the dispersed phase in the matrix polymer phase.

As an example, particle size distribution for compositions IE3 and CE1 are given in Table 5. The inventive compositions show an increase in the mean domain size (and the range of domain size) of the dispersed phase, as well as shorter inter-particle distance as compared to the comparative compositions. In the polypropylene compositions of the inventive examples the matrix phase comprises polypropylene copolymer and the dispersed phase comprise a mixture of polypropylene and polyethylene.

Table 5: Summary of particle size analysis of compositions

| Parameter | IE3 | CE1 |
|---|---|---|
| Mean (nm) | 184 | 143 |
| Max (nm) | 430 | 350 |
| Min (nm) | 90 | 40 |
| Mean inter-particle distance (nm) | 128 | 203 |

Higher resolution scans reveal a core-shell structure for the dispersed phase, which can be more prominently seen in the larger domains. For the inventive compositions, it appears that the polyethylene has a preference to the softer dispersed phase, and consequently the shell is seen to become thinner. The size of the dispersed phase in the inventive compositions is seen to increase as compared to the comparative compositions because of this preferential incorporation of the polyethylene within the dispersed phase.

The dispersed phase in the bimodal polypropylene compositions are in general considered to be "ethylene rich domains".

**Claims**

1. A polypropylene composition comprising

> a base resin (A) and a nucleating agent (B),
> wherein the base resin (A) comprises

> i) 90.0 to 99.9 wt.% of a bimodal propylene random copolymer (PP) with at least one comonomer being ethylene based on the total weight of the base resin (A),
>
>> wherein the bimodal propylene random copolymer (PP) comprises
>>
>>> (PP1) a first propylene random copolymer component and
>>> (PP2) a second propylene random copolymer component, and
>>
>>> wherein the first propylene random copolymer component (PP1) is different from the second propylene random copolymer component (PP2), and
>>> wherein the weight ratio of the first propylene random copolymer component (PP1) including an optional prepolymer component to the second propylene random copolymer component (PP2) is from 30:70 to 70:30, and
>
> ii) 0.1 to 10 wt.% of a polyethylene (PE) having a density of equal or below 940 kg/m$^3$ based on the total weight of the base resin (A), and
>
>> wherein the polypropylene composition has
>>
>>> (a) a melt flow rate MFR$_2$ (2.16 kg, 230°C) of 0.15 to 0.50 g/10 min, determined according to ISO 1133 at 230 °C and a load of 2.16 kg,
>>> (b) a total ethylene content of 5.0 to 12.0 wt.% based on the total weight of the polypropylene composition determined as described in the specification,
>>> (c) a content of xylene cold solubles (XCS) of equal to or below 10.0 wt.% based on the total weight of the polypropylene composition determined according to ISO 16152, and
>>> (d) a Charpy Notched Impact Strength at 23°C of 50.0 kJ/m$^2$ to 100 kJ/m$^2$ and a Charpy Notched Impact Strength at 0°C of at least 5.0 kJ/m$^2$ both determined according to ISO 179/eA:2000 using notched injection moulded type 1A specimens.

2. The polypropylene composition according to claim 1, wherein the weight ratio of the comonomer content of the first propylene random copolymer component (PP1) to the comonomer content of the bimodal propylene random copolymer (PP), both expressed in wt.%, $CO_{PP1}/CO_{PP}$, is 0.35 to 0.70.

3. The polypropylene composition according to claims 1 or 2, wherein the comonomer content of the second propylene random copolymer component (PP2) is 4.0 to 9.0 wt.% based on the total weight of the second propylene random copolymer component (PP2) determined as described in the specification and/or the weight ratio of the comonomer content of the first propylene random copolymer component (PP1) to the comonomer content of the second propylene random copolymer component (PP2) both expressed in wt.%, $CO_{PP1}/C_{OPP2}$, is 0.30 to 0.55.

4. The polypropylene composition according to any one of the preceding claims, wherein the first propylene random copolymer component (PP1) has a higher MFR$_2$ than the second propylene random copolymer component (PP2), preferably the first propylene random copolymer component (PP1) has a melt flow rate MFR$_2$ (2.16 kg, 230°C) of 0.4 to 2.0 g/10 min, determined according to ISO 1133 at 230 °C and a load of 2.16 kg, and/or wherein the bimodal propylene random copolymer (PP) has a melt flow rate MFR$_2$ (2.16 kg, 230°C) of 0.15 to 0.50 g/10 min, determined according to ISO 1133 at 230 °C and a load of 2.16 kg, and/ or wherein the weight ratio of the first propylene random copolymer component (PP1) including an optional prepolymer component to the second propylene random copolymer component (PP2) is from 38:62 to 60:40.

5. The polypropylene composition according to any one of the preceding claims, wherein the ratio of the MFR$_2$ (2.16 kg, 230°C), determined according to ISO 1133 at 230 °C and a load of 2.16 kg, of the bimodal propylene random copolymer (PP) to the MFR$_2$ (2.16 kg, 230°C), determined according to ISO 1133 at 230 °C and a load of 2.16 kg, of the first propylene random copolymer component (PP1), MFR$_{2\ PP}$/MFR$_{2\ PP1}$ is 0.15 to 0.50.

6. The polypropylene composition according to any one of preceding claims having a Flexural Modulus of 700 to 1400 MPa determined according to ISO 178, and/or a tensile modulus of from 700 to 1200 MPa determined according to ISO 527-2 using injection moulded type 1A specimens.

7. The polypropylene composition according to any one of preceding claims wherein the bimodal propylene random copolymer (PP) has a xylene soluble content (XCS) of 4.0 to 9.5 wt.% based on the total weight of the bimodal propylene random copolymer (PP) determined according to ISO 16152 at 25°C.

8. The polypropylene composition according to any of the preceding claims, wherein the nucleating agent (B) is a polymer of vinyl compound according to the following formula

$$CH_2=CH-CHR^1R^2 \qquad (BI)$$

wherein $R^1$ and $R^2$ together form a 5- or 6-membered saturated, unsaturated or aromatic ring, optionally containing substituents, or independently represent an alkyl group comprising 1 to 4 carbon atoms, whereby in case $R^1$ and $R^2$ form an aromatic ring, the hydrogen atom of the $-CHR^1R^2$ moiety is not present.

9. The polypropylene composition according to any of the preceding claims, wherein the polyethylene (PE) is a multimodal linear low density polyethylene (LLDPE), having a density of 910 to 940 kg/m$^3$ and a melt flow rate $MFR_2$ (2.16 kg, 230°C) of 0.05 to 2.0 g/10 min, determined according to ISO 1133 at 230 °C and a load of 2.16 kg, preferably the multimodal LLDPE is a bimodal linear low density ethylene (LLDPE) copolymer having a density of 915 to 940 kg/m$^3$ and a melt flow rate $MFR_2$ (2.16 kg, 230°C) of 0.05 to 0.50 g/10 min, determined according to ISO 1133 at 230 °C and a load of 2.16 kg, or a multimodal linear low density polyethylene (LLDPE) terpolymer of ethylene with two different comonomers selected from alpha-olefins having from 4 to 10 carbon atoms, having a density of 910 to 935 kg/m$^3$, and a melt flow rate $MFR_2$ (2.16 kg, 230°C) of 0.5 to 2.5 g/10 min, determined according to ISO 1133 at 230 °C and a load of 2.16 kg.

10. The polypropylene composition according to any of the preceding claims, wherein the polypropylene composition comprises a continuous matrix phase and a dispersed phase distributed in the matrix phase, wherein the dispersed phase is a particle comprising a core and a shell, wherein the mean particle size of the dispersed phase particles is 50 to 600 nm and the mean inter-particle distance is 20 to 200 nm determined as described in the specification.

11. A process for producing a polypropylene composition according to any of the preceding claims, wherein the bimodal propylene random copolymer (PP) with at least one comonomer being ethylene is polymerized in a multistage polymerization process in the presence of

(I) a solid catalyst component comprising a magnesium halide, a titanium halide and an internal electron donor; and
(II) a cocatalyst comprising an aluminium alkyl and optionally an external electron donor, and
(III) an optional nucleating agent (B), preferably in the presence of a nucleating agent (B);
the multistage process comprising the steps of

(a) continuously polymerizing propylene together with a comonomer selected from alpha-olefins with 2 or 4 to 8 carbon atoms, preferably ethylene, in a first polymerization stage by introducing streams of propylene, hydrogen and ethylene into the first polymerization stage at a temperature of 60 to 80°C and a pressure of 3000 to 6500 kPa to produce a first propylene copolymer component, wherein said first propylene copolymer component (PP1) preferably has a melt flow rate $MFR_2$ 0.4 to 2.0 g/10 min (2.16 kg; 230°C; ISO 1133);
(b) withdrawing from the first polymerization stage a stream comprising said first propylene random copolymer component (PP1) and transferring said stream into a second polymerization stage;
(c) polymerizing propylene together with a comonomer selected from alpha-olefins with 2 or 4 to 8 carbon atoms, preferably ethylene, in said second polymerization stage by introducing streams of propylene, ethylene and optionally hydrogen into said second polymerization stage at a temperature of 70 to 90°C and a pressure of 1000 to 3000 kPa to produce a bimodal propylene random copolymer (PP) of said first propylene random copolymer component (PP1) and a second propylene random copolymer component (PP2);
(d) continuously withdrawing a stream comprising said bimodal propylene random copolymer (PP) from the second polymerization stage and optionally mixing said bimodal propylene random copolymer (PP) with a polyethylene (PE) having a density of equal or below 940 kg/m$^3$ and optionally with additives; and
(e) extruding said bimodal propylene copolymer mixture into pellets, which have a melt flow rate $MFR_2$, (2.16kg; 230°C; ISO 1133) of 0.15 to 0.5 g/10min,

and wherein the first propylene random copolymer component (PP1) is different from the second propylene random copolymer component (PP2), and preferably has a higher MFR than the second propylene random copolymer component (PP2).

12. The polypropylene composition according to any one of claims 1 to 10 obtainable by the process according to claim 11.

13. An article comprising the polypropylene composition according to any one of claims 1 to 10 or claim 12.

14. An article according to claim 13, being a pipe or pipe fitting or injection moulded articles or blow moulded articles, wherein the pipe preferably has a pressure resistance of at least 100 h, determined according to ISO 1167-1:2006 at a hoop stress of 4.5 MPa and 95 °C, and/or

the pipe has a pressure resistance of at least 50 h, determined according to ISO 1167-1:2006 at a hoop stress of 14 MPa and 20 °C, and/or
the pipe has a pressure resistance of at least 1 h, determined according to ISO 1167-1:2006 at a hoop stress of 16 MPa and 20 °C.

15. Use of a polypropylene composition according to any one of claims 1 to 10 or claim 12 for the production of an article.

**Patentansprüche**

1. Polypropylen-Zusammensetzung, umfassend

ein Basisharz (A) und ein Keimbildungsmittel (B),
wobei das Basisharz (A) Folgendes umfasst:

i) 90,0 bis 99,9 Gew.-% eines bimodalen statistischen Propylen-Copolymers (PP), wobei mindestens ein Comonomer Ethylen ist, bezogen auf das Gesamtgewicht des Basisharzes (A),

wobei das bimodale statistische Propylen-Copolymer (PP) Folgendes umfasst:

(PP1) eine erste statistische Propylen-Copolymer-Komponente und
(PP2) eine zweite statistische Propylen-Copolymer-Komponente, und

wobei sich die erste statistische Propylen-Copolymer-Komponente (PP1) von der zweiten statistischen Propylen-Copolymer-Komponente (PP2) unterscheidet, und
wobei das Gewichtsverhältnis der ersten statistischen Propylen-Copolymer-Komponente (PP1), einschließlich einer optionalen Prepolymer-Komponente, zur zweiten statistischen Propylen-Copolymer-Komponente (PP2) von 30:70 bis 70:30 beträgt, und

ii) 0,1 bis 10 Gew.-% eines Polyethylens (PE), das eine Dichte von gleich oder unter 940 kg/m$^3$ aufweist, bezogen auf das Gesamtgewicht des Basisharzes (A), und

wobei die Polypropylen-Zusammensetzung Folgendes aufweist:

(a) eine Schmelzflussrate MFR$_2$(2,16 kg, 230 °C) von 0,15 bis 0,50 g/10 min, bestimmt gemäß ISO 1133 bei 230 °C und einer Belastung von 2,16 kg,
(b) einen Gesamt-Ethylengehalt von 5,0 bis 12,0 Gew.-%, bezogen auf das Gesamtgewicht der Polypropylen-Zusammensetzung, bestimmt wie in der Beschreibung beschrieben,
(c) einen Gehalt an xylol-kaltlöslichen Bestandteilen (XCS) von gleich oder unter 10,0 Gew.-%, bezogen auf das Gesamtgewicht der Polypropylen-Zusammensetzung, bestimmt gemäß ISO 16152, und
(d) eine Charpy-Kerbschlagzähigkeit bei 23 °C von 50,0 kJ/m$^2$ bis 100 kJ/m$^2$ und eine Charpy-Kerbschlagzähigkeit bei 0 °C von mindestens 5,0 kJ/m$^2$, beide bestimmt gemäß ISO 179/eA:2000 unter Verwendung von gekerbten spritzgegossenen Typ-1A-Prüfkörpern.

2. Polypropylen-Zusammensetzung nach Anspruch 1, wobei das Gewichtsverhältnis des Comonomergehalts der ersten statistischen Propylen-Copolymer-Komponente (PP1) zum Comonomergehalt des bimodalen statistischen Propylen-Copolymers (PP), beide ausgedrückt in Gew.-%, Co$_{PP1}$/Co$_{PP}$, 0,35 bis 0,70 beträgt.

3. Polypropylen-Zusammensetzung nach Anspruch 1 oder 2, wobei der Comonomergehalt der zweiten statistischen Propylen-Copolymer-Komponente (PP2) 4,0 bis 9,0 Gew.-% beträgt, bezogen auf das Gesamtgewicht der zweiten statistischen Propylen-Copolymer-Komponente (PP2), bestimmt wie in der Beschreibung beschrieben, und/oder das Gewichtsverhältnis des Comonomergehalts der ersten statistischen Propylen-Copolymer-Komponente (PP1) zum Comonomergehalt der zweiten statistischen Propylen-Copolymer-Komponente (PP2), beide ausgedrückt in Gew.-%, $CO_{PP1}/C_{OPP2}$, 0,30 bis 0,55 beträgt.

4. Polypropylen-Zusammensetzung nach einem der vorstehenden Ansprüche, wobei die erste statistische Propylen-Copolymer-Komponente (PP1) eine höhere $MFR_2$ aufweist als die zweite statistische Propylen-Copolymer-Komponente (PP2), wobei vorzugsweise die erste statistische Propylen-Copolymer-Komponente (PP1) eine Schmelz-flussrate $MFR_2$ (2,16 kg, 230 °C) von 0,4 bis 2,0 g/10 min aufweist, bestimmt gemäß ISO 1133 bei 230 °C und einer Belastung von 2,16 kg, und/oder wobei das bimodale statistische Propylen-Copolymer (PP) eine Schmelzflussrate $MFR_2$ (2,16 kg, 230 °C) von 0,15 bis 0,50 g/10 min aufweist, bestimmt gemäß ISO 1133 bei 230 °C und einer Belastung von 2,16 kg, und/oder wobei das Gewichtsverhältnis der ersten statistischen Propylen-Copolymer-Komponente (PP1), einschließlich einer optionalen Prepolymer-Komponente, zur zweiten statistischen Propylen-Copolymer-Komponente (PP2) von 38:62 bis 60:40 beträgt.

5. Polypropylen-Zusammensetzung nach einem der vorstehenden Ansprüche, wobei das Verhältnis der $MFR_2$ (2,16 kg, 230 °C), bestimmt gemäß ISO 1133 bei 230 °C und einer Belastung von 2,16 kg, des bimodalen statistischen Propylen-Copolymers (PP) zur $MFR_2$ (2,16 kg, 230 °C), bestimmt gemäß ISO 1133 bei 230 °C und einer Belastung von 2,16 kg, der ersten statistischen Propylen-Copolymer-Komponente (PP1), $MFR_{2\,PP}/MFR_{2\,PP1}$, von 0,15 bis 0,50 beträgt.

6. Polypropylen-Zusammensetzung nach einem der vorstehenden Ansprüche, die einen Biegemodul von 700 bis 1400 MPa, bestimmt gemäß ISO 178, und/oder einen Zugmodul von 700 bis 1200 MPa, bestimmt gemäß ISO 527-2 unter Verwendung von spritzgegossenen Typ-1A-Prüfkörpern, aufweist.

7. Polypropylen-Zusammensetzung nach einem der vorstehenden Ansprüche, wobei das bimodale statistische Propylen-Copolymer (PP) einen xylollöslichen Gehalt (XCS) von 4,0 bis 9,5 Gew.-%, bezogen auf das Gesamtgewicht des bimodalen statistischen Propylen-Copolymers (PP), aufweist, bestimmt gemäß ISO 16152 bei 25°C.

8. Polypropylen-Zusammensetzung nach einem der vorstehenden Ansprüche, wobei das Keimbildungsmittel (B) ein Polymer einer Vinylverbindung gemäß der folgenden Formel ist

$$CH_2{=}CH{-}CHR^1R^2 \qquad (BI)$$

wobei $R^1$ und $R^2$ zusammen einen 5- oder 6-gliedrigen gesättigten, ungesättigten oder aromatischen Ring bilden, der optional Substituenten enthält, oder unabhängig voneinander eine Alkylgruppe umfassend 1 bis 4 Kohlenstoffatome darstellen, wobei im Fall, dass $R^1$ und $R^2$ einen aromatischen Ring bilden, das Wasserstoffatom der $-CHR^1R^2$-Gruppe nicht vorhanden ist.

9. Polypropylen-Zusammensetzung nach einem der vorstehenden Ansprüche, wobei das Polyethylen (PE) ein multimodales lineares Polyethylen niedriger Dichte (LLDPE) ist, das eine Dichte von 910 bis 940 kg/m³ und eine Schmelzflussrate $MFR_2$ (2,16 kg, 230 °C) von 0,05 bis 2,0 g/10 min aufweist, bestimmt gemäß ISO 1133 bei 230 °C und einer Belastung von 2,16 kg, wobei vorzugsweise das multimodale LLDPE ein bimodales lineares Polyethylen niedriger Dichte (LLDPE)-Copolymer ist, das eine Dichte von 915 bis 940 kg/m³ und eine Schmelzflussrate $MFR_2$ (2,16 kg, 230 °C) von 0,05 bis 0,50 g/10 min, bestimmt gemäß ISO 1133 bei 230 °C und einer Belastung von 2,16 kg, aufweist, oder ein multimodales lineares Polyethylen niedriger Dichte (LLDPE)-Terpolymer aus Ethylen mit zwei verschiedenen Comonomeren, ausgewählt aus Alpha-Olefinen, die 4 bis 10 Kohlenstoffatome aufweisen, ist, das eine Dichte von 910 bis 935 kg/m³ und eine Schmelzflussrate $MFR_2$ (2,16 kg, 230 °C) von 0,5 bis 2,5 g/10 min, bestimmt gemäß ISO 1133 bei 230 °C und einer Belastung von 2,16 kg, aufweist.

10. Polypropylen-Zusammensetzung nach einem der vorstehenden Ansprüche, wobei die Polypropylen-Zusammensetzung eine kontinuierliche Matrixphase und eine in der Matrixphase verteilte dispergierte Phase umfasst, wobei die dispergierte Phase ein Partikel ist, das einen Kern und eine Hülle umfasst, wobei die mittlere Partikelgröße der Partikel der dispergierten Phase 50 bis 600 nm beträgt und der mittlere Zwischenpartikelabstand 20 bis 200 nm beträgt, bestimmt wie in der Beschreibung beschrieben.

**11.** Verfahren zur Herstellung einer Polypropylen-Zusammensetzung nach einem der vorstehenden Ansprüche, wobei das bimodale statistische Propylen-Copolymer (PP) mit mindestens einem Comonomer, das Ethylen ist, in einem mehrstufigen Polymerisationsverfahren in Gegenwart von Folgendem polymerisiert wird:

(I) einer festen Katalysatorkomponente, die ein Magnesiumhalogenid, ein Titanhalogenid und einen internen Elektronendonor umfasst; und
(II) einem Cokatalysator, der ein Aluminiumalkyl und optional einen externen Elektronendonor umfasst, und
(III) einem optionalen Keimbildungsmittel (B), vorzugsweise in Gegenwart eines Keimbildungsmittels (B);
wobei das mehrstufige Verfahren die folgenden Schritte umfasst:

(a) kontinuierliches Polymerisieren von Propylen zusammen mit einem Comonomer, ausgewählt aus Alpha-Olefinen mit 2 oder 4 bis 8 Kohlenstoffatomen, vorzugsweise Ethylen, in einer ersten Polymerisationsstufe durch Einleiten von Strömen aus Propylen, Wasserstoff und Ethylen in die erste Polymerisationsstufe bei einer Temperatur von 60 bis 80 °C und einem Druck von 3000 bis 6500 kPa, um eine erste Propylen-Copolymer-Komponente herzustellen, wobei die erste Propylen-Copolymer-Komponente (PP1) vorzugsweise eine Schmelzflussrate $MFR_2$ von 0,4 bis 2,0 g/10 min (2,16 kg; 230 °C; ISO 1133) aufweist;
(b) Abziehen eines Stroms aus der ersten Polymerisationsstufe, der die erste statistische Propylen-Copolymer-Komponente (PP1) umfasst, und Überführen des Stroms in eine zweite Polymerisationsstufe;
(c) Polymerisieren von Propylen zusammen mit einem Comonomer, ausgewählt aus Alpha-Olefinen mit 2 oder 4 bis 8 Kohlenstoffatomen, vorzugsweise Ethylen, in der zweiten Polymerisationsstufe durch Einleiten von Strömen aus Propylen, Ethylen und optional Wasserstoff in die zweite Polymerisationsstufe bei einer Temperatur von 70 bis 90 °C und einem Druck von 1000 bis 3000 kPa, um ein bimodales statistisches Propylen-Copolymer (PP) aus der ersten statistischen Propylen-Copolymer-Komponente (PP1) und einer zweiten statistischen Propylen-Copolymer-Komponente (PP2) herzustellen;
(d) kontinuierliches Abziehen eines Stroms aus der zweiten Polymerisationsstufe, der das bimodale statistische Propylen-Copolymer (PP) umfasst, und optional Mischen des bimodalen statistischen Propylen-Copolymers (PP) mit einem Polyethylen (PE), das eine Dichte von gleich oder unter 940 kg/m³ aufweist, sowie optional mit Additiven; und
(e) Extrudieren der bimodalen Propylen-Copolymer-Mischung zu Pellets, die eine Schmelzflussrate $MFR_2$ (2,16 kg; 230 °C; ISO 1133) von 0,15 bis 0,5 g/10 min aufweisen,

wobei sich die erste statistische Propylen-Copolymer-Komponente (PP1) von der zweiten statistischen Propylen-Copolymer-Komponente (PP2) unterscheidet und vorzugsweise einen höheren MFR aufweist als die zweite statistische Propylen-Copolymer-Komponente (PP2).

**12.** Polypropylen-Zusammensetzung nach einem der Ansprüche 1 bis 10, erhältlich durch das Verfahren nach Anspruch 11.

**13.** Gegenstand, der die Polypropylen-Zusammensetzung nach einem der Ansprüche 1 bis 10 oder Anspruch 12 umfasst.

**14.** Gegenstand nach Anspruch 13, der ein Rohr oder Rohrformstück oder Spritzgussgegenstand oder Blasformgegenstand ist, wobei das Rohr vorzugsweise eine Druckbeständigkeit von mindestens 100 h aufweist, bestimmt gemäß ISO 1167-1:2006 bei einer Umfangsspannung von 4,5 MPa und 95 °C, und/oder

das Rohr eine Druckbeständigkeit von mindestens 50 h aufweist, bestimmt gemäß ISO 1167-1:2006 bei einer Umfangsspannung von 14 MPa und 20 °C, und/oder
das Rohr eine Druckbeständigkeit von mindestens 1 h aufweist, bestimmt gemäß ISO 1167-1:2006 bei einer Umfangsspannung von 16 MPa und 20 °C.

**15.** Verwendung einer Polypropylen-Zusammensetzung nach einem der Ansprüche 1 bis 10 oder Anspruch 12 zur Herstellung eines Gegenstands.

**Revendications**

**1.** Composition de polypropylène comprenant

une résine de base (A) et un agent de nucléation (B),
dans laquelle la résine de base (A) comprend

i) 90,0 à 99,9 % en poids d'un copolymère statistique bimodal de propylène (PP) comprenant au moins un comonomère qui est l'éthylène, sur la base du poids total de la résine de base (A),

dans laquelle le copolymère statistique bimodal de propylène (PP) comprend

(PP1) un premier composant copolymère statistique de propylène et
(PP2) un deuxième composant copolymère statistique de propylène, et

dans laquelle le premier composant copolymère statistique de propylène (PP1) est différent du deuxième composant copolymère statistique de propylène (PP2), et
dans laquelle le rapport pondéral du premier composant copolymère statistique de propylène (PP1), comprenant un composant prépolymère facultatif, au deuxième composant copolymère statistique de propylène (PP2) est de 30:70 à 70:30, et

ii) 0,1 à 10 % en poids d'un polyéthylène (PE) ayant une densité inférieure ou égale à 940 kg/m$^3$, sur la base du poids total de la résine de base (A), et

dans laquelle la composition de polypropylène présente

(a) un indice de fluidité à l'état fondu MFR$_2$ (2,16 kg, 230 °C) de 0,15 à 0,50 g/10 min, déterminé conformément à la norme ISO 1133 à 230 °C et sous une charge de 2,16 kg,
(b) une teneur totale en éthylène de 5,0 à 12,0 % en poids, sur la base du poids total de la composition de polypropylène, déterminée comme décrit dans la description,
(c) une teneur en solubles à froid dans le xylène (XCS) inférieure ou égale à 10,0 % en poids, sur la base du poids total de la composition de polypropylène, déterminée conformément à la norme ISO 16152, et
(d) une résistance au choc Charpy avec entaille à 23 °C de 50,0 kJ/m$^2$ à 100 kJ/m$^2$ et une résistance au choc Charpy avec entaille à 0 °C d'au moins 5,0 kJ/m$^2$, toutes deux déterminées conformément à la norme ISO 179/eA:2000 au moyen d'éprouvettes moulées par injection de type 1A entaillées.

2. Composition de polypropylène selon la revendication 1, dans laquelle le rapport pondéral de la teneur en comonomère du premier composant copolymère statistique de propylène (PP1) à la teneur en comonomère du copolymère statistique bimodal de propylène (PP), les deux étant exprimées en % en poids, CO$_{PP1}$/CO$_{PP}$, est de 0,35 à 0,70.

3. Composition de polypropylène selon la revendication 1 ou 2, dans laquelle la teneur en comonomère du deuxième composant copolymère statistique de propylène (PP2) est de 4,0 à 9,0 % en poids, sur la base du poids total du deuxième composant copolymère statistique de propylène (PP2), déterminée comme décrit dans la description, et/ou le rapport pondéral de la teneur en comonomère du premier composant copolymère statistique de propylène (PP1) à la teneur en comonomère du deuxième composant copolymère statistique de propylène (PP2), les deux étant exprimées en % en poids, CO$_{PP1}$/C$_{OPP2}$, est de 0,30 à 0,55.

4. Composition de polypropylène selon l'une quelconque des revendications précédentes, dans laquelle le premier composant copolymère statistique de propylène (PP1) présente un MFR$_2$ supérieur à celui du deuxième composant copolymère statistique de propylène (PP2), de préférence le premier composant copolymère statistique de propylène (PP1) présente un indice de fluidité à l'état fondu MFR$_2$ (2,16 kg, 230 °C) de 0,4 à 2,0 g/10 min, déterminé conformément à la norme ISO 1133 à 230 °C et sous une charge de 2,16 kg, et/ou dans laquelle le copolymère statistique bimodal de propylène (PP) présente un indice de fluidité à l'état fondu MFR$_2$ (2,16 kg, 230 °C) de 0,15 à 0,50 g/10 min, déterminé conformément à la norme ISO 1133 à 230 °C et sous une charge de 2,16 kg, et/ou dans laquelle le rapport pondéral du premier composant copolymère statistique de propylène (PP1), comprenant un composant prépolymère facultatif, au deuxième composant copolymère statistique de propylène (PP2) est de 38:62 à 60:40.

5. Composition de polypropylène selon l'une quelconque des revendications précédentes, dans laquelle le rapport du MFR$_2$ (2,16 kg, 230 °C), déterminé conformément à la norme ISO 1133 à 230 °C et sous une charge de 2,16 kg, du copolymère statistique bimodal de propylène (PP) au MFR$_2$ (2,16 kg, 230 °C), déterminé conformément à la norme ISO 1133 à 230 °C et sous une charge de 2,16 kg, du premier composant copolymère statistique de propylène (PP1),

$MFR_{2PP}/MFR_{2PP1}$, est de 0,15 à 0,50.

6. Composition de polypropylène selon l'une quelconque des revendications précédentes présentant un module de flexion de 700 à 1 400 MPa, déterminé conformément à la norme ISO 178, et/ou un module de traction de 700 à 1200 MPa, déterminé conformément à la norme ISO 527-2 au moyen d'éprouvettes moulées par injection de type 1A.

7. Composition de polypropylène selon l'une quelconque des revendications précédentes, dans laquelle le copolymère statistique bimodal de propylène (PP) présente une teneur en solubles dans le xylène (XCS) de 4,0 à 9,5 % en poids, sur la base du poids total du copolymère statistique bimodal de propylène (PP), déterminée conformément à la norme ISO 16152 à 25 °C.

8. Composition de polypropylène selon l'une quelconque des revendications précédentes, dans laquelle l'agent de nucléation (B) est un polymère d'un composé vinylique selon la formule suivante

$$CH_2=CH-CHR^1R^2 \qquad (BI)$$

dans laquelle $R^1$ et $R^2$ forment ensemble un cycle saturé, insaturé ou aromatique à 5 ou 6 chaînons, contenant éventuellement des substituants, ou représentent indépendamment un groupe alkyle comprenant 1 à 4 atomes de carbone, étant entendu que dans le cas où $R^1$ et $R^2$ forment un cycle aromatique, l'atome d'hydrogène du groupement $-CHR^1R^2$ n'est pas présent.

9. Composition de polypropylène selon l'une quelconque des revendications précédentes, dans laquelle le polyéthylène (PE) est un polyéthylène linéaire basse densité (LLDPE) multimodal, présentant une densité de 910 à 940 kg/m$^3$ et un indice de fluidité à l'état fondu $MFR_2$ (2,16 kg, 230 °C) de 0,05 à 2,0 g/10 min, déterminé conformément à la norme ISO 1133 à 230 °C et sous une charge de 2,16 kg, de préférence le LLDPE multimodal est un copolymère bimodal d'éthylène linéaire basse densité (LLDPE) présentant une densité de 915 à 940 kg/m$^3$ et un indice de fluidité à l'état fondu $MFR_2$ (2,16 kg, 230 °C) de 0,05 à 0,50 g/10 min, déterminé conformément à la norme ISO 1133 à 230 °C et sous une charge de 2,16 kg, ou un terpolymère multimodal de polyéthylène linéaire basse densité (LLDPE) d'éthylène avec deux comonomères différents sélectionnés parmi des alpha-oléfines comprenant de 4 à 10 atomes de carbone, présentant une densité de 910 à 935 kg/m$^3$ et un indice de fluidité à l'état fondu $MFR_2$ (2,16 kg, 230 °C) de 0,5 à 2,5 g/10 min, déterminé conformément à la norme ISO 1133 à 230 °C et sous une charge de 2,16 kg.

10. Composition de polypropylène selon l'une quelconque des revendications précédentes, dans laquelle la composition de polypropylène comprend une phase matricielle continue et une phase dispersée répartie dans la phase matricielle, dans laquelle la phase dispersée est une particule comprenant un noyau et une enveloppe, dans laquelle la taille moyenne de particule des particules de la phase dispersée est de 50 à 600 nm et la distance interparticulaire moyenne est de 20 à 200 nm, déterminées comme décrit dans la description.

11. Procédé de production d'une composition de polypropylène selon l'une quelconque des revendications précédentes, dans lequel le copolymère statistique bimodal de propylène (PP) comprenant au moins un comonomère qui est l'éthylène est polymérisé dans un procédé de polymérisation à plusieurs stades en présence de

    (I) un composant catalytique solide comprenant un halogénure de magnésium, un halogénure de titane et un donneur d'électrons interne ; et
    (II) un cocatalyseur comprenant un alkyle d'aluminium et éventuellement un donneur d'électrons externe, et
    (III) un agent de nucléation (B) facultatif, de préférence en présence d'un agent de nucléation (B) ; le procédé à plusieurs stades comprenant les étapes consistant à

        (a) polymériser en continu du propylène conjointement avec un comonomère sélectionné parmi des alpha-oléfines comportant 2 ou 4 à 8 atomes de carbone, de préférence l'éthylène, dans un premier stade de polymérisation par introduction de flux de propylène, d'hydrogène et d'éthylène dans le premier stade de polymérisation à une température de 60 à 80 °C et à une pression de 3 000 à 6 500 kPa afin de produire un premier composant copolymère de propylène, ledit premier composant copolymère de propylène (PP1) présentant de préférence un indice de fluidité à l'état fondu $MFR_2$ de 0,4 à 2,0 g/10 min (2,16 kg ; 230 °C ; ISO 1133) ;
        (b) soutirer du premier stade de polymérisation un flux comprenant ledit premier composant copolymère statistique de propylène (PP1) et transférer ledit flux dans un deuxième stade de polymérisation ;
        (c) polymériser du propylène conjointement avec un comonomère sélectionné parmi des alpha-oléfines comportant 2 ou 4 à 8 atomes de carbone, de préférence l'éthylène, dans ledit deuxième stade de polymérisation par introduction de flux de propylène, d'éthylène et éventuellement d'hydrogène dans ledit deuxième stade de polymérisation à une température de 70 à 90 °C et à une pression de 1 000 à 3000 kPa afin de produire un copolymère statistique bimodal de propylène (PP) composé dudit premier composant copolymère statistique de propylène (PP1) et d'un deuxième composant copolymère statistique de propylène (PP2) ;

(d) soutirer en continu du deuxième stade de polymérisation un flux comprenant ledit copolymère statistique bimodal de propylène (PP) et mélanger éventuellement ledit copolymère statistique bimodal de propylène (PP) avec un polyéthylène (PE) ayant une densité inférieure ou égale à 940 kg/m$^3$ et éventuellement avec des additifs ; et

(e) extruder ledit mélange de copolymère bimodal de propylène sous forme de granulés, lesquels présentent un indice de fluidité à l'état fondu MFR$_2$ (2,16 kg ; 230 °C ; ISO 1133) de 0,15 à 0,5 g/10 min,

et dans lequel le premier composant copolymère statistique de propylène (PP1) est différent du deuxième composant copolymère statistique de propylène (PP2), et présente de préférence un MFR supérieur à celui du deuxième composant copolymère statistique de propylène (PP2).

12. Composition de polypropylène selon l'une quelconque des revendications 1 à 10 pouvant être obtenue par le procédé selon la revendication 11.

13. Article comprenant la composition de polypropylène selon l'une quelconque des revendications 1 à 10 ou la revendication 12.

14. Article selon la revendication 13, étant un tuyau ou un raccord de tuyau, ou un article moulé par injection ou un article moulé par soufflage, dans lequel le tuyau présente de préférence une résistance à la pression d'au moins 100 h, déterminée conformément à la norme ISO 1167-1:2006 à une contrainte circonférentielle de 4,5 MPa et à 95 °C, et/ou

le tuyau présente une résistance à la pression d'au moins 50 h, déterminée conformément à la norme ISO 1167-1:2006 à une contrainte circonférentielle de 14 MPa et à 20 °C, et/ou

le tuyau présente une résistance à la pression d'au moins 1 h, déterminée conformément à la norme ISO 1167-1:2006 à une contrainte circonférentielle de 16 MPa et à 20 °C.

15. Utilisation d'une composition de polypropylène selon l'une quelconque des revendications 1 à 10 ou la revendication 12 pour la production d'un article.

**Figure 1**

Figure 2

A
B

**Figure 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3645628 B1
- EP 1028984 A
- WO 006831 A
- WO 9858975 A
- WO 9858976 A
- EP 887380 A
- WO 9858977 A
- GB 1580635 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- EP 1860125 A
- EP 887379 A
- EP 887381 A
- EP 991684 A
- US 4933149 A
- EP 684871 A
- WO 2005087361 A
- US 4578879 A
- EP 600414 A
- EP 721798 A
- WO 2007025640 A
- US 4543399 A
- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 8707620 A
- WO 9221705 A
- WO 9311165 A
- WO 9311166 A
- WO 9319100 A
- WO 9736939 A
- WO 9812234 A
- WO 9933842 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- WO 2004000933 A1
- WO 2016083208 A
- EP 491566 A
- EP 591224 A
- EP 586390 A

**Non-patent literature cited in the description**

- **HANS ZWEIFEL**. Plastic Additives Handbook. 2009, 1141-1190
- **GELDART** ; **BAYENS**. The Design of Distributors for Gas-fluidized Beds. *Powder Technology*, 1985, vol. 42
- **GELDART**. Gas Fluidization Technology. J.Wiley & Sons, 1986
- **HEINO, E.L.** ; **LEHTINEN, A.** ; **TANNER J.** ; **SEPPÄLÄ, J.** Rheological characterization of poly-ethylene fractions. *Theor. Appl. Rheol., Proc. Int. Congr. Rheol, 11th*, 1992, vol. 1, 360-362
- **HEINO, E.L.** The influence of molecular structure on some rheological properties of polyethylene. *Annual Transactions of the Nordic Rheology Society*, 1995
- Definition of terms relating to the non-ultimate mechanical properties of polymers. *Pure & Appl. Chem.*, 1998, vol. 70 (3), 701-754